(19) **Europäisches Patentamt**
**European Patent Office**
**Office européen des brevets**

(11) **EP 4 050 364 B1**

(12) **EUROPEAN PATENT SPECIFICATION**

(45) Date of publication and mention
of the grant of the patent:
**11.09.2024 Bulletin 2024/37**

(51) International Patent Classification (IPC):
**G01S 7/02** *(2006.01)*     **G01S 7/35** *(2006.01)*
**G01S 13/34** *(2006.01)*    **G01S 13/42** *(2006.01)*
**G01S 13/58** *(2006.01)*    **G01S 13/931** *(2020.01)*
**G01S 3/14** *(2006.01)*     **G01S 3/04** *(2006.01)*
**G01S 7/03** *(2006.01)*     **G01S 13/44** *(2006.01)*
**G01S 13/02** *(2006.01)*

(21) Application number: **22157177.1**

(22) Date of filing: **17.02.2022**

(52) Cooperative Patent Classification (CPC):
**G01S 13/931; G01S 3/043; G01S 3/14; G01S 7/03;
G01S 7/356; G01S 13/34; G01S 13/44;
G01S 13/584**

(54) **RADAR DETECTION USING ANGLE OF ARRIVAL ESTIMATION BASED ON SCALING PARAMETER WITH PRUNED SPARSE LEARNING OF SUPPORT VECTOR**

RADARDETEKTION UNTER VERWENDUNG DER EINFALLSWINKELSCHÄTZUNG BASIEREND AUF SKALIERUNGSPARAMETERN MIT BESCHNITTENEM SPÄRLICHEM LERNEN DES UNTERSTÜTZUNGSVEKTORS

DÉTECTION RADAR UTILISANT UNE ESTIMATION D'ANGLE D'ARRIVÉE BASÉE SUR UN PARAMÈTRE DE MISE À L'ÉCHELLE AVEC UN APPRENTISSAGE ÉPARS ÉLAGUÉ DU VECTEUR DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2021 US 202117185162**

(43) Date of publication of application:
**31.08.2022 Bulletin 2022/35**

(73) Proprietor: **NXP B.V.**
**5656 AG Eindhoven (NL)**

(72) Inventors:
• **Wu, Ryan Haoyun**
**5656 AG Eindhoven (NL)**
• **Li, Jun**
**5656 AG Eindhoven (NL)**
• **Brett, Maik**
**5656 AG Eindhoven (NL)**

• **Staudenmaier, Michael Andreas**
**5656 AG Eindhoven (NL)**

(74) Representative: **Schmütz, Christian Klaus Johannes**
**NXP Semiconductors Germany GmbH**
**Intellectual Property Group**
**Beiersdorfstr. 12**
**22529 Hamburg (DE)**

(56) References cited:
**CN-A- 109 061 556**

• **CHEN ZHIMIN ET AL: "A Robust Sparse Bayesian Learning-Based DOA Estimation Method With Phase Calibration", IEEE ACCESS, IEEE, USA, vol. 8, 31 July 2020 (2020-07-31), pages 141511 - 141522, XP011805416, DOI: 10.1109/ACCESS.2020.3013610**

**Description**

OVERVIEW

Aspects of various embodiments are directed to radar apparatuses/systems and related methods.

In certain radar signaling applications including but not limited to automotive and autonomous vehicle applications, high spatial resolution may be desirable for detecting and distinguishing objects which are perceived as being located at the similar distances and/or moving at similar velocities. For instance, it may be useful to discern directional characteristics of radar reflections from two or more objects that are closely spaced, to accurately identify information such as location and velocity of the objects.

Virtual antenna arrays have been used to mitigate ambiguity issues with regards to apparent replicas in discerned reflections as indicated, for example, by the amplitudes of corresponding signals as perceived in the spatial resolution spectrum (e.g., amplitudes of main lobes or "grating lobes"). But even with many advancements in configurations and algorithms involving virtual antenna array, radar-based detection systems continue to be susceptible to ambiguities and in many instances yield less-than optimal or desirable spatial resolution. Among these advancements, virtual antenna arrays have been used with multiple-input multiple-output (MIMO) antennas to achieve a higher spatial resolution, but such approaches can be challenging to implement successfully, particularly in rapidly-changing environments such as those involving automobiles travelling at relatively high speeds.

These and other matters have presented challenges to efficiencies of radar implementations, for a variety of applications.

CN 109 061 556 A discloses a method for estimating a sparse iteration direction of arrival based on an elastic network. CHEN ZHIMIN ET AL: "A Robust Sparse Bayesian Learning-Based DOA Estimation Method With Phase Calibration", IEEE ACCESS, IEEE, USA, vol. 8, 31 July 2020 (2020-07-31), pages 141511-141522, XP011805416, DOI: 10.1109/ACCESS.2020.3013610 discloses addressing the DOA estimation problem in the multiple-input multiple-output (MIMO) radar system.

SUMMARY

The present invention is defined by the claims. Various example embodiments are directed to issues such as those addressed above and/or others which may become apparent from the following disclosure concerning radar devices and systems in which objects are detected by sensing and processing reflections or radar signals for discerning location information and related information including as examples, distance, angle-of-arrival and/or speed information.

In certain example embodiments, aspects of the present disclosure are directed to radar-based processing circuitry, and/or use of such circuitry, configured to solve for a sparse array AoA (angle of arrival) estimation problem in which it may be beneficial to recognize and overcome ambiguities for an accurate AoA estimation while also accounting for data processing throughput and computation resources. More specific aspects of the present disclosure are directed to overcoming the estimation problem by carrying out a set of steps which help to account for measurement errors and noise by iteratively updating measurement-error and noise parameters, and with the set up steps using a matrix-based model in which each of the possible spectrum support vectors is drawn from a long-tail (or Cauchy-like) distribution, for example, as may be used in known Sparse Bayesian Models in automatic relevance determination methodologies.

In more specific example embodiments, the present disclosure is directed to a method and/or an apparatus involving a radar system having a logic circuit and an array (e.g., in which at least one uniform sparse linear array may be embedded) for processing radar reflection signals. Various steps or actions carried out by the radar logic circuitry include generating output data indicative of the reflection signals' amplitudes, and discerning angle-of-arrival information for the output data by correlating the output data with an iteratively-refined estimate of a sparse spectrum support vector ("support vector"). The estimate approach may include: assessing at least one most probable spectrum support vector from among a plurality of most probable spectrum support vectors modeled as random values in a matrix drawn from a long-tail distribution that is controlled as a function of a scaling parameter; and update a set of parameters including a covariance estimate, the scaling parameter, and a noise variance parameter which is being associated with a measurement error for said at least one most probable spectrum support vector from a previous iteration.

In other more specific examples, the above examples may involve one or more of the following aspects (e.g., such aspects being used alone and/or in any of a variety of combinations). The sparse spatial frequency support vector may be processed as a random variable using a matrix-based model, and with the matrix-based model processed by Cholesky decomposition with each iterative update, so as to reduce computational burdens. The long-tail distribution may be a Cauchy distribution, and the set of parameters may further include a covariance estimate. Further, for each iterative update, certain of said at least one most probable spectrum support vector having respective amplitudes, may be pruned, and these correspond to those selected ones which are insignificant relative to a statistical expectation of the at least one most probable spectrum support vector associated with a preceding iteration.

In further examples and also related to the above aspects, the computer processing circuitry may convert a modeled set of said at least one most probable spectrum support vector to a tractable Gaussian model of said at least one most probable spectrum support vector, and may apply a Laplace approximation for providing said tractable Gaussian model of said at least one most probable spectrum support vector.

In yet other specific examples, the steps may be carried out sequentially, without inversion of a matrix in the matrix-based model, with the update of the statistical expectation of the support vector following the update of the covariance estimate of the support vector, and the update of the noise variance parameter following the update of the statistical expectation of the support vector. Further, the set of parameters may include a noise variance parameter, and a precision vector associated with a random variable $\tau$ such that the conditional probability of the support vector in a current iterative update, given $\tau$, is a joint Gaussian distribution, and the conditional probability of $\tau$ itself is a Gamma distribution with multiple parameters chosen to promote sparse outcomes for the iteratively-refined estimate.

In the above examples and/or other specific example embodiments, further aspects are as follows. The iterative updating of the parameters may be carried out over an increasing iteration count which stops upon reaching or satisfying a threshold criteria which may be a function of the multiple parameters and/or a function of a measurement error (e.g., having a Gaussian distribution). In response to the threshold criteria, resultant data may be generated to provide the discerned angle-of-arrival information as an output. Also, the measurement error may correspond to an error probability given the constraint of the support vector after its most recent iterative update. Further, to increase the accuracy, the array may have at least two embedded arrays, each of which is being associated with a unique antenna-element spacing from among a set of unique co-prime antenna-element spacings.

In an example embodiment of the present disclosure, an apparatus is provided according to claim 1.

In one or more embodiments, the long-tail distribution is a Cauchy distribution.

In one or more embodiments, the scaling parameter is initialized to a value that is greater than one over a spectral amplitude corresponding to the generated output data, and the noise variance parameter is initialized to be close to a measured noise variance.

In one or more embodiments, the set of parameters further includes a covariance estimate.

In one or more embodiments, with each iteration the computer processing circuitry is further to process the matrix via Cholesky decomposition.

In one or more embodiments, the computer processing circuitry is further to convert a modeled set of said at least one most probable spectrum support vector to a tractable Gaussian model of said at least one most probable spectrum support vector.

In one or more embodiments, the computer processing circuitry is further to apply a Laplace approximation for providing said tractable Gaussian model of said at least one most probable spectrum support vector.

In one or more embodiments, the iterative updating of the set of parameters is carried out over an increasing iteration count which stops as a function of the parameters becoming optimized.

In one or more embodiments, the apparatus further including: sets of antennas for radar signal transmission and reception; front-end analog circuitry for radar signal transmissions and in response, reception of reflections from the radar signal transmissions; and conversion circuitry to communicatively couple the front-end analog circuitry with the computer processing circuitry.

In another example embodiment of the present disclosure, a method for use in radar circuit is provided according to claim 13.

In one or more embodiments, the scaling parameter is initialized to a value that is greater than one over a spectral amplitude corresponding to the generated output data, and the noise variance parameter is initialized to be close to a measured noise variance.

In another example embodiment of the present disclosure, an apparatus comprising a radar system according to claims 10, 11 and 12 is provided.

The above discussion/summary is not intended to describe each embodiment or every implementation of the present disclosure. The figures and detailed description that follow also exemplify various embodiments.

BRIEF DESCRIPTION OF FIGURES

Various example embodiments may be more completely understood in consideration of the following detailed description in connection with the accompanying drawings, in which:

FIG. 1A is a system-level diagram of a radar-based object detection circuit, in accordance with the present disclosure;
FIG. 1B is another system-level diagram of a more specific radar-based object detection circuit, in accordance with the present disclosure;
FIG. 2 is a signal-flow diagram illustrating an exemplary set of activities for a system of the type implemented in a manner consistent with FIGs. 1 and 2, in accordance with the present disclosure;

FIGs. 3A and 3B illustrate, respectively, a set of plots showing effective antenna spacings and a graph of normalized spatial frequency which may be associated with a system of the type implemented in a manner consistent with FIGs. 1A, 1B and/or 2 for illustrating aspects of the present disclosure in accordance with the present disclosure;

FIGs. 4A and 4B are respectively a different set of plots showing effective antenna spacings and a related graph of normalized spatial frequency, in accordance with the present disclosure;

FIGs. 5A and 5B are respectively yet another set of plots showing effective antenna spacings and a related graph of normalized spatial frequency, in accordance with the present disclosure;

FIG. 6 is a flow chart showing one example manner in which certain more specific aspects of the present disclosure may be carried out; and

FIGs. 7A and 7B are respective plots comparing numbers of support vectors in a first type of process and a second alternative type of process, each consistent with the present disclosure.

## DETAILED DESCRIPTION

Aspects of the present disclosure are believed to be applicable to a variety of different types of apparatuses, systems and methods involving radar systems and related communications. In certain implementations, aspects of the present disclosure have been shown to be beneficial when used in the context of automotive radar in environments susceptible to the presence of multiple objects within a relatively small region. While not necessarily so limited, various aspects may be appreciated through the following discussion of non-limiting examples which use exemplary contexts.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element.

In a particular embodiment, a radar-based system or radar-detection circuit may include a radar circuit front-end with signal transmission circuitry to transmit radar signals and with signal reception circuitry to receive, in response, reflection signals as reflections from objects which may be targeted by the radar-detection circuit or system. In processing of data corresponding to the reflection signals, logic or computer-processing circuitry solves for a sparse array AoA (angle-of-arrival) estimation problem in which ambiguities may be recognized and overcome for an accurate AoA estimation. For a more accurate estimation, the circuitry should also account for measurement errors and noise, while also respecting data-processing throughput and computation-resource goals associated with practicable designs.

In a more specific example, aspects of the present disclosure are directed to overcoming the estimation problem by carrying out a set of steps which help to account for such measurement errors and noise by iteratively updating measurement-error and noise parameters, and by using a matrix-based model in which each of the possible spectrum support vectors is drawn from a distinct distribution, for example, as may be used in known Sparse Bayesian models in automatic relevance determination methodologies.

In a particular embodiment, a radar-based system or radar-detection circuit may include a sparse array, whether a multi-input multi-output (MIMO) or other type of array, embedded with one or multiple uniform sparse linear arrays, to process the reflection-related signals. From the sparse array, output data is presented as measurement vectors, indicative of signal magnitudes associated with the reflection signals, to another module for discerning angle-of-arrival (AoA) information.

The logic or computer processing circuitry associated with this AoA module determines or estimates the AoA information by correlating the output data with at least one spatial frequency support vector indicative of a correlation peak for the output data. For example, in one specific example of a method according to the present disclosure, the determination and/or estimation may be realized by carrying out a set of steps in connection with a matrix-based probabilities computation which help to account for measurement errors and noise by iteratively updating measurement-error and noise parameters, and with the set up steps using a matrix-based model in which each of the possible spectrum support vectors is drawn from a long-tail (e.g., Cauchy-like) distribution.

In a related more-specific example of the present disclosure, the long-tail distribution is processed or controlled as a function of a scaling parameter and with the scaling parameter being updated along with each iteration (e.g., along with the iterative updating of one or more other parameters). Such iterative refinement leads to a report, as output data generated from such processing, corresponding to an iteratively-refined estimate of a sparse spectrum support vector ("support vector"). The approach may more specifically include: assessing at least one most probable spectrum support vector from among a plurality of most probable spectrum support vectors modeled as random values in a matrix drawn from the long-tail distribution; and update a set of parameters including a covariance estimate, the scaling parameter, and a noise variance parameter which is being associated with a measurement error for said at least one most probable spectrum support vector from a previous iteration.

To help offset burdens in connection with processing of the matrix-based computations, in specific examples the above type of approach may be further enhanced by including with each iterative update, an automatic pruning effort to eliminate certain of the less-probable support vectors from among the many most probable spectrum support vectors. These are selected as the support vectors having amplitudes which are insignificant relative to a statistical expectation of the support vector of in a preceding iteration. The statistical expectation among a plurality of support vectors may be, for example, an average or a median vector or another middle-ground selection taken from within a limited range such as the mean or median plus and/or minus seven percent.

Certain more particular aspects of the present disclosure are directed to such use and/or design of the AoA module in response to such output data from a sparse array which, as will become apparent, may be implemented in any of a variety of different manners, depending on the design goals and applications. Accordingly given that the data flow and related processing operations in such devices and systems is perceived as being performed in connection with the sparse array first, in the following discussion certain optional designs of the sparse array are first addressed and then the discussion herein shifts to such particular aspects involving use and/or design of the AoA module.

Among various exemplary designs consistent with the present disclosure, one specific design for the sparse array has it arranged to include a plurality of embedded sparse linear arrays, with each such array being associated with a unique antenna-element spacing from among a set of unique co-prime antenna-element spacings. As will become apparent, such co-prime spacings refer to numeric value assignments of spacings between antenna elements, wherein two such values are coprime (or co-prime) if the only positive integer (factor) that divides both of them is 1; therefore, the values are coprime if any prime number that divides one does not divide the other. As a method in use, such a radar-based circuit or system transmits radar signals and, in response, receives reflection signals as reflections from targeted objects which may be in a particular field of view. The sparse (virtual) array provides processing of data corresponding to the reflections by using at least two embedded (e.g., MIMO-embedded) sparse linear arrays, each being associated with one such unique antenna-element spacing. In other designs for the sparse array, there are either embedded uniform sparse linear array and/or multiple, each being associated with a unique antenna-element spacing which may or may not be necessarily selected from among set of unique co-prime antenna-element spacings.

These unique co-prime antenna-element spacings may be selected to cause respective unique grating lobe centers along a spatially discrete sampling spectrum, so as to facilitate differentiating lobe centers from side lobes, as shown in experiments relating to the present disclosure. In this context, each sparse linear arrays may have a different detectable amplitude due to associated grating lobe centers not coinciding and mitigating ambiguity among side lobes adjacent to the grating lobe centers. In certain more specific examples also consistent with such examples of the present disclosure, the grating lobe center of one such sparse linear array is coincident with a null of the grating lobe center of another of the sparse linear arrays, thereby helping to distinguish the grating lobe center and mitigate against ambiguous measurements and analyses.

In various more specific examples, the sparse array may include various numbers of such sparse linear arrays (e.g., two, three, several or more such sparse linear arrays). In each such example, there is a respective spacing value associated with each of the sparse linear arrays and collectively, these respective spacing values form a co-prime relationship. For example, in an example wherein the array includes two sparse linear arrays, there are two corresponding spacing values that form a co-prime relationship which is a co-prime pair where there are only two sparse linear arrays.

In other specific examples, the present disclosure is directed to radar communication circuitry that operates with first and second (and, in some instances, more) uniform MIMO antenna arrays that are used together in a non-uniform arrangement, and with each such array being associated with a unique antenna-element spacing from among a set of unique co-prime antenna-element spacings that form a co-prime relationship (as in the case of a co-prime pair). The first uniform antenna array has transmitting antennas and receiving antennas in a first sparse arrangement, and the second uniform antenna array has transmitting antennas and receiving antennas in a different sparse arrangement. The radar communication circuitry operates with the first and second antenna arrays to transmit radar signals utilizing the transmitting antennas in the first and second arrays, and to receive reflections of the transmitted radar signals from an object utilizing the receiving antennas in the first and second arrays. Directional characteristics of the object relative to the antennas are determined by comparing the reflections received by the first array with the reflections received by the second array during a common time period. Such a time period may correspond to a particular instance in time (e.g., voltages concurrently measured at feed points of the receiving antennas), or a time period corresponding to multiple waveforms. The sparse array antennas may be spaced apart from one another within a vehicle with the radar communication circuitry being configured to ascertain the directional characteristics relative to the vehicle and the object as the vehicle is moving through a dynamic environment. An estimate of the DOA may be obtained and combined to determine an accurate DOA for multiple objects.

The reflections may be compared in a variety of manners. In some implementations, a reflection detected by the first array that overlaps with a reflection detected by the second array is identified and used for determining DOA. Correspondingly, reflections detected by the first array that are offset in angle relative to reflections detected by the second array. The reflections may also be compared during respective instances in time; and used together to ascertain the directional characteristics of the object. Further, time and/or space averaging may be utilized to provide an averaged comparison over time and/or (e.g., after covariance matrix spatial smoothing).

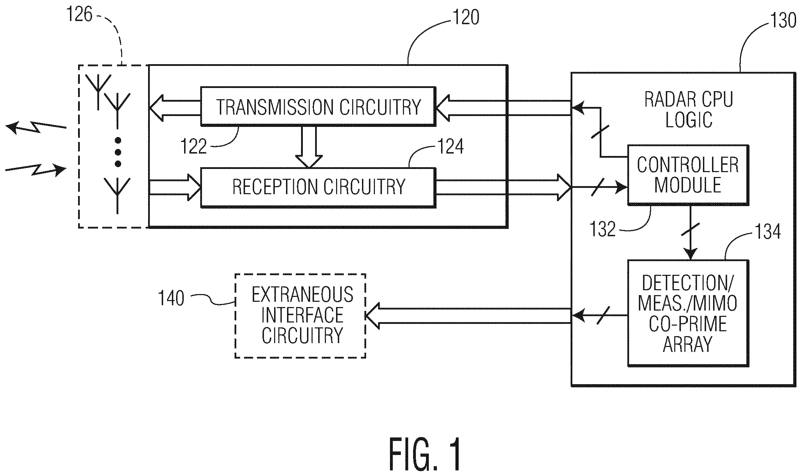

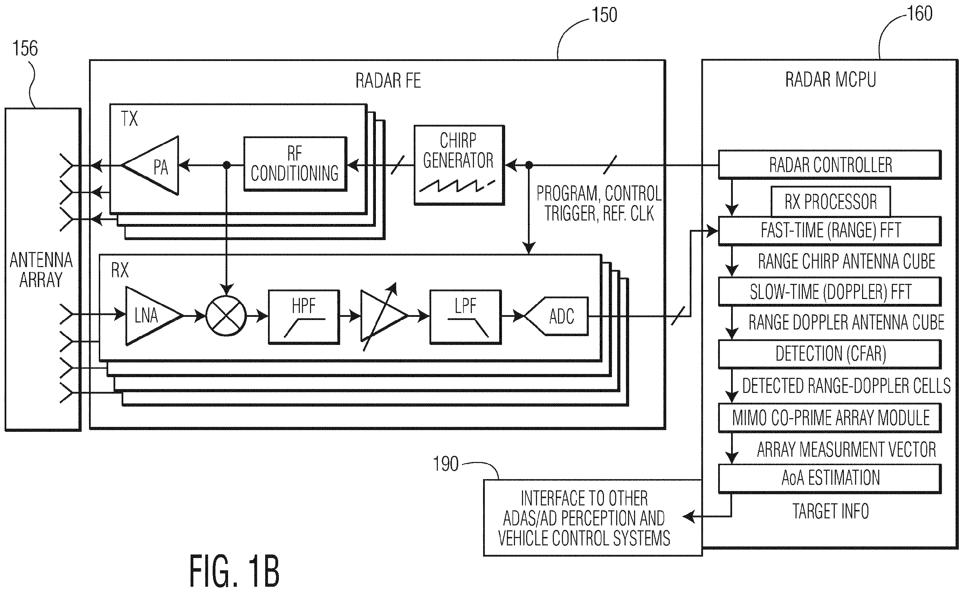

In accordance with the present disclosure, FIGs. 1A and 1B are block diagrams to illustrate examples of how such above-described aspects and circuity may be implemented. Bearing in mind that aspects of the present disclosure are applicable to a variety of radar applications which may use, for example, different types of memory arrays (e.g., whether or not MIMO-based technology) and different modulation schemes and waveforms, FIG. 1A may be viewed as a generalized functional diagram of a Linear Frequency Modulation (LFM) automotive MIMO radar involving a radar-based detection transceiver having a radar circuit and a MIMO array such as described in one of the examples above.

More specifically, in the example depicted in FIG. 1A, the radar circuit includes a front end 120 with signal transmission circuitry 122 to transmit radar signals and with signal reception circuitry 124 to receive, in response, reflection signals as reflections from objects (not shown). Antenna elements, as in the examples above, are depicted in block 126 via dotted lines as part of the front end 120 or as a separate portion of the radar device. Logic circuitry 130 may include CPU and/or control circuitry 132 for coordinating the signals to and from the front end circuitries 122 and 124, and may include a MIMO virtual array as part of module 134. In many examples, the MIMO virtual array provides an output that is used to estimate AoA information and, therefore, in this example, module 134 is depicted as having a MIMO virtual array and a detection/measurement aspect.

After processing via the sparse (MIMO virtual) array via its sparse linear arrays, each with unique co-prime antenna-element spacing values, the module 134 may provide an output to circuitry/interface 140 for further processing. As an example, the circuitry/interface 140 may be configured with circuitry to provide data useful for generating high-resolution radar images as used by drive-scene perception processors for various purposes; these may include one or more of target detection, classification, tracking, fusion, semantic segmentation, path prediction and planning, and/or actuation control processes which are part of an advanced driver assistance system (ADAS), vehicle control, and autonomous driving (AD) system onboard a vehicle. In certain specific examples, the drive scene perception processors may be internal or external (as indicated with the dotted lines at 140) to the integrated radar system or circuit.

The example depicted in FIG. 1B shows a more specific type of implementation which is consistent with the example of *FIG. 1A*. Accordingly in FIG. 1B, the radar circuit includes a front end 150 with transmit and receive paths as with the example of FIG. 1A. The transmit path is depicted, as in the upper portion of FIG. 1B, with including a bus for carrying signals used to configure/program, to provide control information such as for triggering sending and sampling of send and receive signals and a reference clock signal which may be used to time-align (or synchronize) such activities between the transmit and receive paths of the front end 150. These signals are used to transmit radar signals, via a chirp generation circuit and RF (radio or radar frequency) conditioning-amplification circuits as are known in many radar communications systems. In the example of FIG. 1B, multiple conditioning-amplification circuits are shown driving respectively arranged transmit antenna elements within an antenna array block 156. In certain contexts, the antenna array block 156 may be considered part of or separate from the front end 150.

The antenna array block 156 also has respectively arranged receive antenna elements for receiving reflections and presenting corresponding signals to respective amplifiers which provide outputs for subsequent front-end processing. As is conventional, this front-end processing may include mixing (summing or multiplying) with the respective outputs of the conditioning-amplification circuits, high-pass filtering, further amplification following by low-pass filtering and finally analog-to-digital conversion for presenting corresponding digital versions (e.g., samples) of the front end's processed analog signals to logic circuitry 160.

The logic circuitry 160 in this example is shown to include a radar controller for providing the above-discussed control/signal bus, and a receive-signal processing CPU or module including three to five functional submodules. In this particular example, the first three of these functional submodules as well as the last such submodule (which is an AoA estimation module as discussed with FIG. 1A) may be conventional or implemented with other advancements. These first three submodules are: a fast-time FFT (fast-Fourier transform) block for generating object-range estimations and providing such estimations to a range-chirp antenna cube; a slow-time FFT block for Doppler estimations as stored in range-Doppler antenna cube; and a detection block which uses the previous block to generate data associated with objects detected as being in (range-Doppler) cells.

The fourth submodule in this particular example is a MIMO co-prime array module which, as discussed above, may be implemented using at least two MIMO-embedded sparse linear arrays, each being associated with one such unique antenna-element spacing, such as with values that manifest a co-prime relationship.

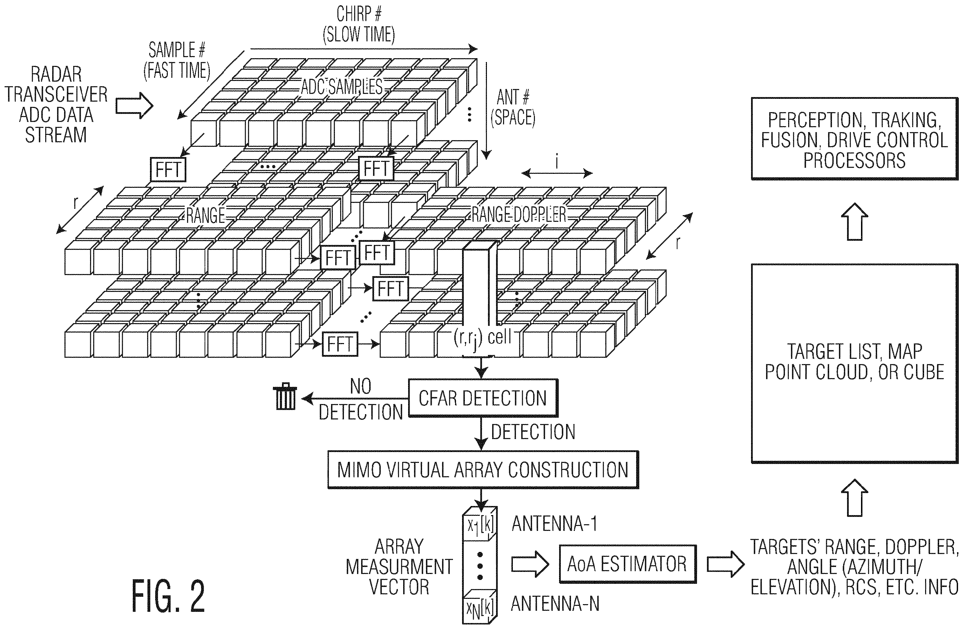

Consistent with the logic circuitry 160, FIG. 2 is a block diagram showing data flow for a LFM MIMO automotive radar receiver and specifically for the processing chain for data from the ADC data signal such as in FIG. 1B. Upon receiving the ADC sample stream from the radar transceiver, the chirp data is first processed for range spectrum using FFT accelerators, and the accumulated range-chirp map then is processed over the chirp dimension with another FFT to produce Doppler spectrum and produces the Range Doppler map for each channel. Detection may use any of various implementations such as via a CFAR (adaptive constant false alarm rate) algorithm to detect the presence of targets in certain cells. For each detected range-Doppler cell, the MIMO virtual array may be constructed according to specific MIMO waveform processing requirements and may be used to produce an array measurement vector that is ready for AoA estimation processing. Such an AoA Estimator may then process the array measurement vector and produce target position information for use by subsequent circuits or systems (e.g., for data logging, display, and downstream perception, fusion, tracking, drive control processing).

In such examples using the MIMO for a co-prime array, as in the module of the logic circuitry 160, an advantageous aspect of concerns the suppression of spurious sidelobes as perceived in the spatial resolution spectrum in which the amplitudes of main lobes or "grating lobes" are sought to be distinguished and detected. Spurious sidelobes are suppressed by designing the MIMO co-prime array module as a composite array including at least two uniform linear arrays (ULA) with co-prime spacings. By using co-prime spacing, ambiguities caused by the sidelobes are naturally suppressed. The suppression grows stronger when the composite ULA is extended to larger sizes by adding additional MIMO-based transmitters via each additional ULA, as the suppression of spurious sidelobes may be limited by the size of the two composite ULAs. In the cases where higher suppression is desirable to achieve better target dynamic range, further processing may be implemented.

In experimentation/simulation efforts leading to aspect of the present disclosure, comparisons of a 46-element uniform linear array (ULA) and a 16-element sparse array (SPA) of 46-element aperture has shown that the SPA and ULA have similar aperture parameters but the spatial under sampling of the SPA results in many ambiguous spurious sidelobes, and that further reducing the amplitudes of the spurious sidelobes results in a significant reduction of targets (or object) being falsely identified and/or located. In such a spatial resolution spectrum, the amplitude peaks in the spectrum corresponds to detected targets.

A more specific example of the present disclosure is directed to further mitigating the spurious sidelobe issues by setting up the issues using probability theories having related probability solutions. Using the sparsity constraint imposed upon the angular spectrum, such issues are known as L-1 Norm minimization problems. Well-known techniques such as Orthogonal Matching Pursuit (OMP) may be used for resolving the sparse angular spectrum; however, the performance is impacted by the sensitivity to array geometry and support selection, sensitivity to angle quantitation, and/or the growing burden of least-squares (LS) computation as more targets are found. Alternatively and as a further aspect of the present disclosure, such performance may be improved by mitigating the angle quantization problem to a large degree by carrying out a set of steps which, as noted above, help to account for measurement errors and noise by iteratively updating measurement-error and noise parameters. These steps may use a matrix-based model in which each of the possible spectrum support vectors is drawn from a distinct distribution, for example, as may be used in known Sparse Bayesian Models in automatic relevance determination methodologies.

Before further discussing these steps, the discussion first explains how such a sparse array may be used, according to various optional aspects of the present disclosure, to develop and generated the output data used by the AoA estimation module (e.g., 134 of FIG. 1A or as within block 160 of FIG. 1B). One such aspect concerns the extendibility of such a co-prime sparse array. For MIMO-based radars, AoA estimation is based on the reconstructed MIMO virtual array's outputs. In a MIMO radar system, the equivalent position of a virtual antenna element may be obtained by summing the position vectors of the transmitting antenna and receiving antenna. As the result, the sparse array consists of repeating antenna position patterns of the Rx antenna array centered at the Tx antenna positions (or vice versa). Because of the array geometry repeating nature in such radar systems, it is not possible to construct arbitrary sparse array pattern. With this limitation of reduced degrees of freedom, the sidelobe suppression becomes more difficult.

Optionally, the above-described sparse array may be constructed to result in sidelobe suppression being repeatable (e.g., extendable via MIMO Tx) antenna geometry. The constructed sparse (e.g., MIMO virtual) array consists of 2 embedded ULAs each with a unique element spacing. First, the two element spacing values are selected such that they are co-prime numbers (that is, their greatest common factor (GCF) is 1 and their lowest common multiple (LCM) is their product). Secondly, the co-prime pair is selected such that the two composite ULA's results in an array of a (sparse) aperture of the size equal to the LCM and of antenna elements equal to the number of physical Rx antenna elements plus 1. If such array is found, the composite-ULA array can then be repeated at every LCM elements by placing the MIMO TX's LCM elements apart.

For example, for a system of 8 physical Rx antennas and 2 Tx MIMO antennas, a co-prime pair {4, 5} is selected to form the composite-ULA sparse array based on the following arrangement. This is shown in the table below:

| | |
|---|---|
| Element position: | 0 4 5 8 10 12 15 16 20 |
| 4-element spacing ULA: | x_ _ _x_ _ _x_ _ _x_ _ _x_ _ _x |
| 5-element spacing ULA: | x_ _ _ _x_ _ _ _x_ _ _ _x_ _ _ _x |
| {4,5} Composite-ULA SPA: | o_ _ _o o_ _o_o_ _o_ _oo_ _ _o |
| Rx Element Index: | 1 2 3 4 5 6 7 8 9 |

The LCM of {4, 5} co-prime numbers is 20, so, by placing MIMO Tx (transmit, as opposed to Rx for receive) antennas at {0, 20, 40,...} element positions (i.e. integer multiples of LCM), the two ULAs can be naturally extended to form a larger composite-ULA sparse array. This requires careful selection of the co-prime pair. The case of 2 Tx {4, 5} co-prime sparse array can be constructed based on the following arrangement, where the locations of the Tx antennas is marked with 'T' and the locations of the Rx antennas are marked with 'R'. The constructed MIMO virtual antennas' locations are marked with 'V'. The virtual array may consist of 2 embedded ULAs of 4 and 5 element spacings, both with the same (sparse array) aperture size of 36 elements, as below.

```
Position:        0 _ _ _ _ _ _ _ _ _ _ _ _ _ _ 16 _ _ _ 20 _ _ _ _ _ _ _ _ _ _ _ _ _ 36
Tx:              T _ _ _ _ _ _ _ _ _ _ _ _ _ _ _ _ _ _ _ _ T
Rx:              R _ _ _ R R _ _ R _ R _ R _ _ R R _ _ _ _
Virtual:         V _ _ _ V V _ _ V _ V _ V _ _ V V _ _ _ V _ _ _ V V _ _ V _ V _ V _ _ V V
```

Assuming half-wavelength element spacing, for a filled ULA the grating lobe occurs in the angle spectrum outside the +/- 90° Field of view (FOV) so no ambiguity occurs. On the other hand, for the 4-element spacing ULA and the 5-element spacing ULA, grating lobe occurs within the +/- 90° FOV causing ambiguous sidelobes. The use of co-prime element spacings, however, effectively reduces the amplitude level of the ambiguous sidelobes because the centers of the grating lobes of the two co-prime ULAs do not coincide until many repeats of the spatially discretely sampled spectrums. Because the centers of the grating lobes from the two ULAs do not overlap, the composite grating lobes have a lowered amplitude level due to the limited lobe width. Further, not only the centers of the grating lobes do not overlap, the center of the grating lobe of the first ULA coincide with a null of the second ULA such that it is guaranteed that the power from the two ULAs do not coherently add up in the composite array. This directly results in the suppression of the grating lobes in the composite array. As more MIMO Tx's are employed to extend the ULAs, the lobe width is further reduced such that the composite grating lobe levels are further reduced. Thus, aspects of the present disclosure teach use of a sparse MIMO array construction method that is sure to reduce the ambiguous sidelobes (or composite grating lobes of the co-prime ULAs) and the sidelobe suppression performance scales with the number of MIMO Tx's employed. Note that when more MIMO Tx's are employed, the overlap of the grating lobes further decreases. The co-prime pair guarantees a suppression level of roughly 50%. Additional suppression can be achieved by further incorporating additional co-prime ULA(s). For example, {3, 4, 5} are co-prime triplets which suppresses grating lobes to roughly 30% of its original level. {3, 4, 5, 7} are co-prime quadruplets which suppresses grating lobes to roughly 25% of its original level, etc. The percentage of suppression corresponds to the ratio of the number of elements of a co-prime ULA and the total number of elements in the composite array.

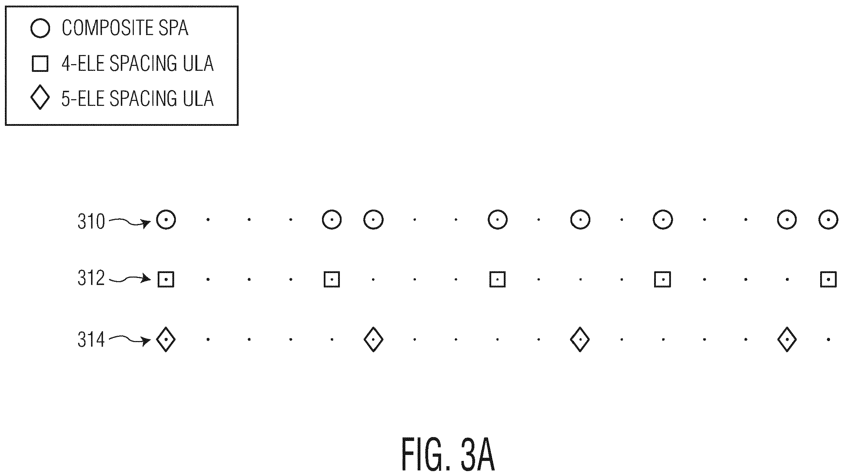

Further understanding of such aspects of the present disclosure may be understood by way of further specific (non-limiting) examples through which reference is again made to the spatial resolution spectrum but in these examples, with spatial frequency plots being normalized. These specific examples are shown in three pairs of figures identified as: FIGs. 3A and 3B; FIGs. 4A and 4B; and FIGs. 5A and 5B. For each pair of figures, the upper figure of the pair first shows the composite SPA with an effective random spacing as implemented by the following two or more ULA's for which the spacing values are based on the co-prime pairing or co-prime relationship as discussed above. The lower figure of the pair shows a plot of the relative measurements of the lobes positioned over a horizontal axis representing the normalized spatial frequency plots respectively corresponding to the composite SPA and its related ULA's with the noted spacings.

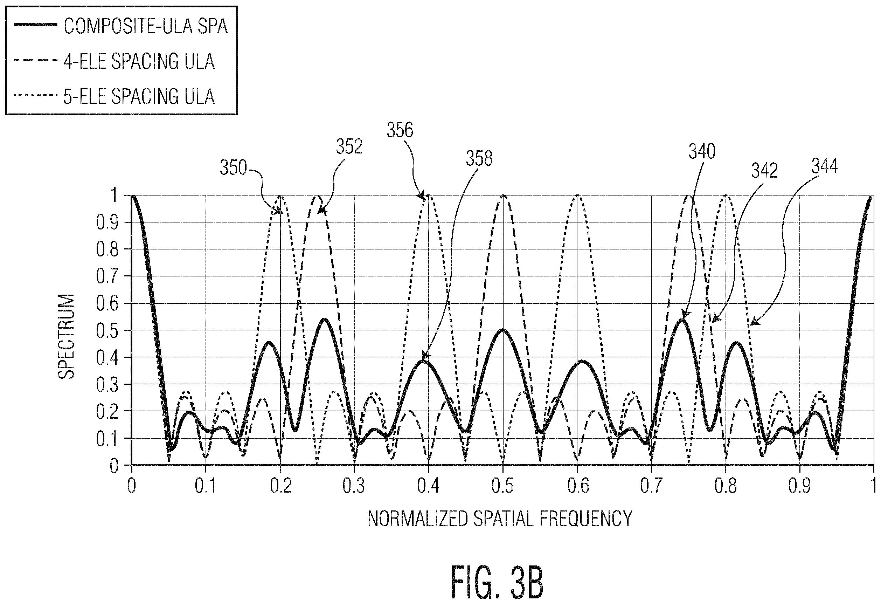

In FIGs. 3A and 3B, a {4, 5} co-prime sparse array of 8 elements is depicted. The composite SPA corresponds to spacing 310 and plot 340, and the two ULAs for which the antenna element spacing values are 4 (312) and 5 (314) are depicted as corresponding to plots 342 and 344. The co-prime ULA angle spectrums are illustrated in which the non-coincident grating lobes can be seen with partial overlap at 350 and 352 of FIG. 3B. It can also be observed that the grating lobes of one ULA coincides with nulls of the other ULA's (at 356 and 358 of FIG. 3B) showing significance of the sidelobe suppression effect. The resulting grating lobe in the composite array is about half of the origin amplitude.

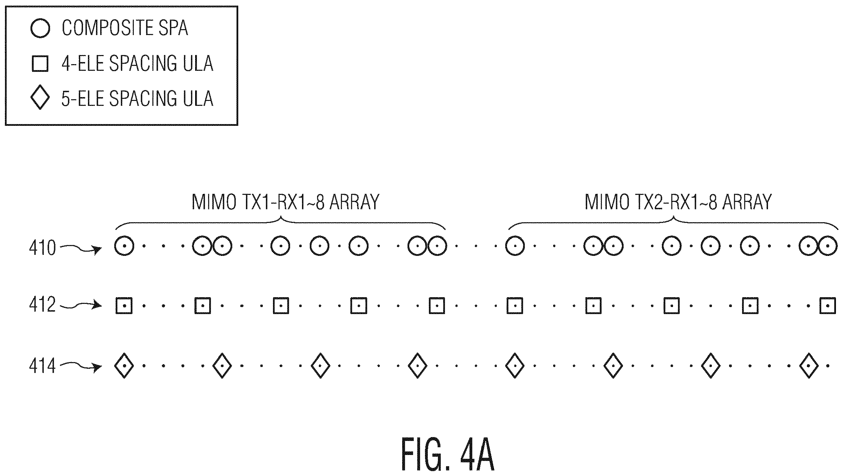

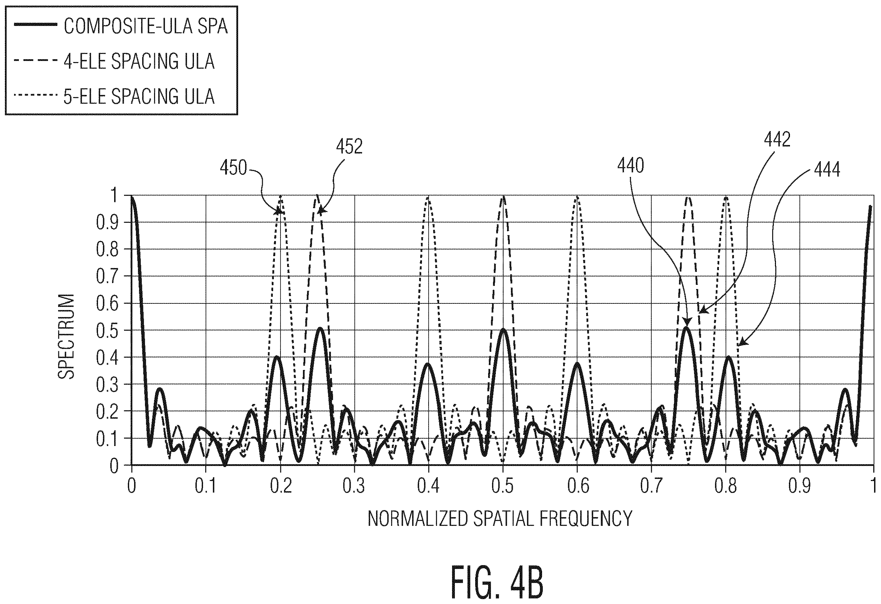

FIGs. 4A and 4B illustrate a 2-Tx MIMO extended {4,5} co-prime sparse array which is used to produce a 16-element co-prime array. The 16-element co-prime array is realized using an extension of the co-prime ULAs by way of an additional MIMO (transmit array) as seen at the top of FIG. 4A. The composite SPA, having the additional MIMO, corresponds to spacing 410 and plot 440, and the two ULAs for which the antenna element spacing values are 4 (412) and 5 (414) are depicted as corresponding to plots 342 and 344. It can be seen that the grating lobe's beam width is halved (at 450 and 452) such that the amount of overlap is reduced. The resulting composite array angle spectrum not only has further suppressed grating lobes, but they are also more distinctly identifiable for resolving/mitigating false detections in connection with later sparse array processing steps.

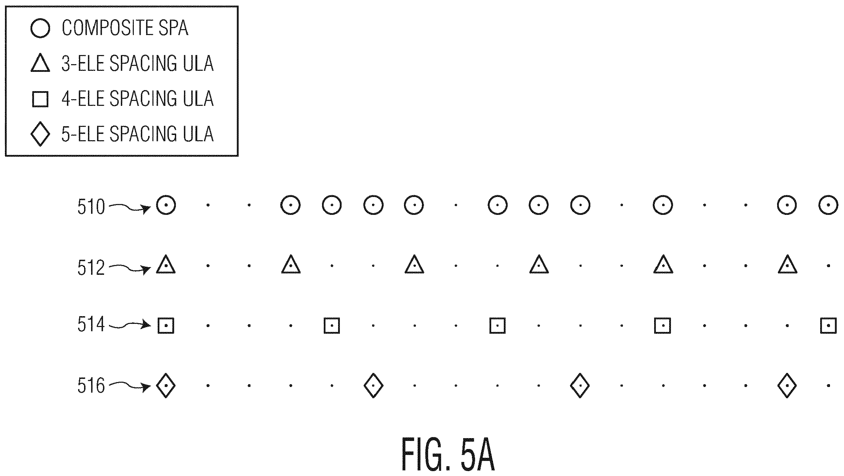

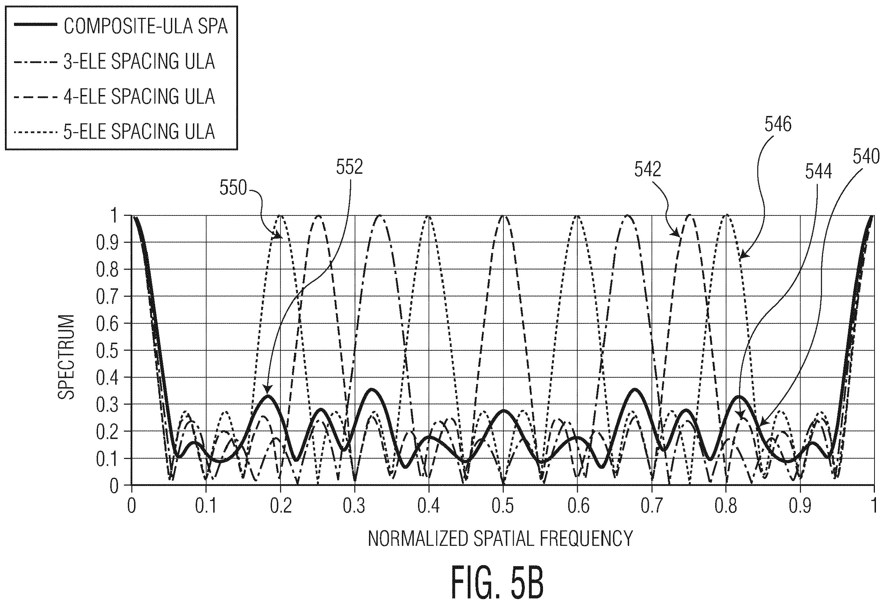

In FIGs. 5A and 5B, a {3, 4, 5} co-prime sparse array is illustrated which produces an 11-element co-prime array. It can be seen that the grating lobe's level is suppressed further (at 550 and 552) with this extension of a third sparse array. The composite SPA corresponds to spacing 510 and plot 540, and the three ULAs for which the antenna element spacing values are 3 (512), 4 (514) and 5 (516) are depicted as corresponding to plots 542, 544 and 546. The number of embedded sparse ULAs may include, for example, between three and six (or more) embedded sparse linear arrays

In other examples, relative to the example of FIG. 3A and 3B, the number of ULA' may be increased (as in FIGs. 5A and 5B) and the number of extension(s) may be increased (as in FIGs. 4A and 4B)

One may also compute individual co-prime ULA angle spectrums and detect angle-domain targets separately for each spectrum. In such an approach, only targets detected consistently in all co-prime ULA spectrums may be declared as being a valid target detection. In such an embodiment which is consistent with the present disclosure, the individual co-prime ULA's AoA spectrum are first produced and targets are identified as peaks above a predetermined threshold. Next, detected targets are check if they are present in the same angle bin in all co-prime ULAs' spectrums. If it is consistently detected in the same angle bin of all spectrums, a target is declared. Otherwise it is considered as a false detection and discarded.

In general, conventional processing for AoA estimation effectively corresponds to random spatial sampling and this leads to a sparse array design. It can be proven that the maximum spurious sidelobe level is proportional to the coherence so it follows that by designing a matrix A that has low coherence, this leads to low spurious sidelobes and vice versa. This demonstrates that by employing the extendable MIMO co-prime array approach of the present disclosure, reduced coherence can be achieved, and sparse recovery of targets can be obtained using greedy algorithms. In this context, such above-described MIMO array aspects are complemented by addressing the sparse spectral signal linear regression problem.

More specifically, to process the output of a sparse array, standard beamforming or Fourier spectral analysis based processing suffers due to the non-uniform spatial sampling which violates the Nyquist sampling rules. As a result, high spurious angle sidelobes will be present alone with the true target beams. To mitigate the spurious sidelobes, one may impose sparsity constraints on the angle spectrum outputs and solve the problem accordingly. One class of algorithms, based on so called greedy algorithms, originally developed for solving underdetermined linear problems, can be used for estimating the sparse spectrum output.

As is known the greedy algorithm starts by modelling the angle estimation problem as a linear regression problem, that is, by modelling the array output measurement vector x as a product of an array steering matrix A and a spatial frequency support amplitude vector c plus noise e, where each column of A is a steering vector of the array steered to a support spatial frequency ($f_1$, $f_1$,... $f_M$) in normalized unit (between 0 and 1) upon which one desires to evaluate the amplitude of a target and the spatial sampling positions ($t_1$, $t_1$,... $t_N$) in normalized integer units. To achieve high angular resolution, a large number of supports can be established, thereby dividing up the $0\sim2\pi$ radian frequency spectrum resulting in a fine grid and a "wide" A matrix (that is, number of columns, which corresponds to the number of supports, is much greater than the number of rows, which corresponds to the number of array outputs or measurements). Since A is a wide matrix, this implies that the number of unknowns (vector c) is greater than the number of knowns (vector x) and the solving of equation x = Ac + e is an under-determined linear regression problem, where x and e are Nx1 vectors, A is a NxM matrix, and c is a Mx1 vector . This is seen below as:

$$\begin{bmatrix} x_1 \\ \vdots \\ x_N \end{bmatrix} = \frac{1}{N} \begin{bmatrix} e^{j2\pi f_1 t_1} & e^{j2\pi f_2 t_1} & ... & e^{j2\pi f_{M-1} t_1} & e^{j2\pi f_M t_1} \\ e^{j2\pi f_1 t_2} & e^{j2\pi f_2 t_2} & ... & e^{j2\pi f_{M-1} t_2} & e^{j2\pi f_M t_2} \\ & & \vdots & & \\ e^{j2\pi f_1 t_N} & e^{j2\pi f_2 t_N} & ... & e^{j2\pi f_{M-1} t_N} & e^{j2\pi f_M t_N} \end{bmatrix} \begin{bmatrix} c_1 \\ c_2 \\ \vdots \\ c_{M-1} \\ c_M \end{bmatrix} + \begin{bmatrix} e_1 \\ \vdots \\ e_N \end{bmatrix}$$

Next, the greedy algorithm identifies one or more most probable supports and assuming one such most probable support, measures this support's most probable amplitude, and this is followed by cancellation of its contribution to the array output measurement vector to obtain a residual array measurement vector **r**. Based on the residual measurement vector, the process repeats until all supports are found or a stop criteria is met.

The identification of the most probably support (without loss of generality, assume one support is to be selected at a time) is by correlating the columns of **A** with measurement vector and support frequency that leads to the highest correlation is selected. The correlation vector, **y**, can be directly computed by $y = A^H x$ for the first iteration where $A^H$ denotes the transpose-conjugate (i.e. Hermitian transpose) **of A.** In general, for the k-th iteration, the correlation output is computed as $y = A^H r_k$ where $r_k$ is the residual measurement vector computed in the k-1-th iteration and $r_1 = x.$ The found support of the k-th iteration is then added to a solution support set $s \in \{i_1, i_2, ... i_k\}$.

The amplitude of the found support and the residual measurement vector can be obtained in any of various versatile ways. One known method, known as Matching Pursuit or MP, involves an iterative search through which the correlator peak's amplitude is found, and the amplitude is simply selected as the correlator peak's amplitude. Another known method, known as Orthogonal Matching Pursuit or OMP, in which a least-squares (LS) fitted solution is selected as the amplitude. The LS-fit is based on solving a new equation $x = A_s c_s$ in LS sense, where $A_s$ consists of columns of A of selected support set and elements of $\mathbf{c}_s$ is a subset of elements of c of the selected supports. Once the amplitudes are found, the residual measurement vector is updated by $\mathbf{r}_{k+1} = \mathbf{x} - \mathbf{A}_s \hat{\mathbf{c}}_s$ where $\hat{\mathbf{c}}_s$ is the LS solution of $\mathbf{c}_s$. One solution to the LS problem is simply the pseudo inverse from which $\hat{\mathbf{c}}_s$ is solved by $\hat{\mathbf{c}}_s = (\mathbf{A}_s^H \mathbf{A}_s)^{-1} \mathbf{A}_s \mathbf{x}$ (for square or narrow matrix $\mathbf{A}_s$) or $\mathbf{A}_S^H (\mathbf{A}_S \mathbf{A}_S^H)^{-1} \mathbf{x}$ (for wide matrix $\mathbf{A}_s$).

The MP and OMP method can be used to reconstruct the sparse spectrum $c$ if a certain property of $A$ is met. One of such widely used property is Coherence, $\mu(\mathbf{A})$, defined by the equation $\mu(\mathbf{A}) = \max_{1 \leq i, j \leq M} \frac{\left| \mathbf{A}_i^H \mathbf{A}_j \right|}{\left\| \mathbf{A}_i \right\|_2 \left\| \mathbf{A}_j \right\|_2}$, where $\mathbf{A}_i$ and $\mathbf{A}_j$ are the i-th and the j-th column of $\mathbf{A}$, respectively and in theory, $\mu(\mathbf{A}) \geq \sqrt{\frac{M-N}{N(M-1)}}$. According to the known theory, unique sparse reconstruction is guaranteed if $\mu(\mathbf{A}) < \frac{1}{2K-1}$ where K denotes the number detectable targets (i.e. number of supports with amplitude above noise level). So, the lower the Coherence, the large value of $K$ is possible. Note that unique reconstruction is possible if such condition is not met, only that it cannot be guaranteed based on the known theory.

In order to achieve high angular resolution, many supports much more than the number of measurements (i.e. N«M) is modelled and estimated. This naturally leads to very high Coherence which in turn results in small K or recoverable target amplitudes. One way to reduce the Coherence is by randomizing the spatial sampling of the steering vectors. For example, one may create a N'x1 steering vector where N' > N, and randomly (following any sub-Gaussian or Gaussian probability distribution) deleting the samples to obtain a Nx1 vector. The resulting matrix is called Random Fourier matrix. In the following equation, the matrix $\mathbf{A}$ represents such a Random Fourier matrix where $\{t_1, t_2, ..., t_N\}$ are $N$ integers randomly selected from $\{0,1, ..., N'\}$.

$$\mathbf{x} = \mathbf{Ac} + \mathbf{e}$$

$$\begin{bmatrix} x_1 \\ \vdots \\ x_N \end{bmatrix} = \frac{1}{N} \begin{bmatrix} e^{j2\pi f_1 t_1} & e^{j2\pi f_2 t_1} & \dots & e^{j2\pi f_{M-1} t_1} & e^{j2\pi f_M t_1} \\ e^{j2\pi f_1 t_2} & e^{j2\pi f_2 t_2} & \dots & e^{j2\pi f_{M-1} t_2} & e^{j2\pi f_M t_2} \\ & & \vdots & & \\ e^{j2\pi f_1 t_N} & e^{j2\pi f_2 t_N} & \dots & e^{j2\pi f_{M-1} t_N} & e^{j2\pi f_M t_N} \end{bmatrix} \begin{bmatrix} c_1 \\ c_2 \\ \vdots \\ c_{M-1} \\ c_M \end{bmatrix} + \begin{bmatrix} e_1 \\ \vdots \\ e_N \end{bmatrix}$$

In general, the random spatial sampling requirement leads the sparse array design and it can be proven that the maximum spurious sidelobe level is proportional to the Coherence so by designing a matrix $\mathbf{A}$ that has low Coherence leads to low spurious sidelobes and vice versa. This demonstrates that by employing the extendable MIMO co-prime array approach of the present disclosure previously introduced, reduced Coherence can be achieved, and sparse recovery of targets can be obtained using greedy algorithms.

One problem with a greedy algorithm arises from the quantized supports on which target amplitudes are evaluated. Given finite quantization, which is necessary to keep coherence low, it is not possible to always have signals coincide exactly with the spatial frequency of the supports. When the actual spatial frequency misaligns with any of the supports, it may not be possible to cancel the target signal in its entirety in the residual measurement vector and as a result, neighboring supports are to be selected in order to cancel the signal in the later iteration(s). The resulting solution becomes non-sparse and the sparse recovery performance; thus, the resolution performance, is degraded.

Returning now to the AoA estimation determination and use of the iteratively-executed steps or actions to account for measurement error and noise, another aspect of the present disclosure involves an initialized array steering matrix used to model the angle estimation problem, and for which a solution may be provided through a sparse learning method which has a pruning action carried out in connection with each iteration to rule out supports that are of insignificant amplitude based on previous estimation of the spectrum amplitudes (e.g., as estimated in one or more of the immediately preceding iterations). According to examples of the present disclosure, aspects of the sparse learning methodology is best understood using certain probability theories which are common to Bayesian Linear Regression (BLR) approaches as discussed below.

In BLR, the problem of finding sparse **c** is modeled as the problem of finding the most probable values of **c** given the measurement **x,** corrupted by random noise ε. In other words, **c** is estimated by finding the values of **c** that maximize the posterior probability p(c|x), which can be casted into a simpler problem based on Bayesian theorem, following the max a posteriori (MAP) estimator approach shown as follows: $\hat{c}$ = arg $max_c$ $p(\mathbf{c}|\mathbf{x})$ =

$$\arg max_{\mathbf{c}} \frac{p(\mathbf{X}|\mathbf{C})p(\mathbf{c})}{p(\mathbf{x})} = \arg max_{\mathbf{c}} \ln p(\mathbf{x}|\mathbf{c}) + \ln p(\mathbf{c})$$

In order to find solution of above problem, one may establish some prior knowledge on the probability distribution p(c) and p(x|c). For AoA estimation problems of radar systems, the conditional probability of p(x|c) carries the physical meaning of array measurement noise, which can be modeled as a joint distribution of i.i.d zero-mean Gaussian random variables. As to the selection of the distribution of p(c), there are a variety of a versatile of ways to model it such that the resulting estimate on c is sparse, and Sparse Bayesian Learning (SBL) is an example.

SBL models p(c) by introducing a latent random variable τ such that the conditional probability p(c|τ) is a joint Gaussian distribution and further assuming that p(τ) itself is a Gamma distribution with parameters {α, β} whose value is chosen by the model designer. In the context of SBL, it is favorable to set {α, β} → {0,0} such that the resulting p(c)

$$p(c) \propto \frac{1}{|c|}$$

has a long-tail distribution having a general form of which is robust to outliers thus it promotes sparse solutions (i.e. zero, i.e. noise, is the most probably value with or without the presence of outliers, i.e. target signals). The exact model of the SBL is provided below, with the measurement error being modeled as Gaussian:

$$p(\mathbf{x}|c) = \left(\frac{1}{2\pi\sigma_n^2}\right)^{\frac{N}{2}} e^{-\frac{\|\mathbf{x}-Ac\|_2^2}{2\sigma_n^2}}$$

. The a priori distribution is modeled as a marginal distribution with the following form:

$$p(c) = \int_0^\infty p(c|\tau)p(\tau)\,d\tau$$

where

$$p(c|\tau) = \frac{1}{\sqrt{(2\pi)^M |\Sigma_c^{-1}|}} e^{-\frac{c^H \Sigma_c c}{2}}$$

$$\Sigma_c = diag(\tau)$$

$$p(\tau) = \frac{\beta^\alpha}{\Gamma(\alpha)} \tau^{\alpha-1} e^{-\beta\tau}$$

such that elements of c follows the Student's t distribution,

$$p(c) = \frac{\beta^\alpha \Gamma(\alpha + 0.5)}{\sqrt{2\pi}\Gamma(\alpha)} \left(\beta + \frac{c^2}{2}\right)^{-(\alpha+0.5)}$$

which tends to the form $\frac{1}{|c|}$ when $\alpha \to 0, \beta \to 0$.

With reference to the above relationships, $\hat{c}$ = arg $max_c$ ln $p(x|c)$ + ln $p(c)$ may be solved using above definitions. One may compute the derivative of ln $p(y|c)$ + ln $p(c)$ w.r.t **c** and set it to zero such that **c** can be found, along with distribution parameters $\sigma_n^2$ and $\tau$ also found through maximizing $p(y; \tau, \sigma_n^2)$.

In certain more specific examples and while detailed derivations may be known, $\hat{c}$ may be iteratively found by sequentially updating equations as below with initial values of $\hat{c}$ set according to an FFT beamforming result, $\hat{\sigma}_n^2$ set to a value close to noise variance and wherein $\hat{\tau}_i$ *is* set to suitable identical values such that it cannot be neglected in $\Omega$ nor does it dominates $\Omega$.

Update covariance of **c** given **y**:
$$\boldsymbol{\Omega} = (\frac{1}{\hat{\sigma}_n^2} \mathbf{A}^H \mathbf{A} + \boldsymbol{\Sigma}_c)^{-1}$$

Update mean of **c** given **y** (output spectrum):
$$\hat{\mathbf{c}} = \frac{1}{\hat{\sigma}_n^2} \boldsymbol{\Omega} \mathbf{A}^H \mathbf{x}$$

Update noise variance:
$$\hat{\sigma}_n^2 = \frac{\|\mathbf{x} - \mathbf{A}\hat{\mathbf{c}}\|_2^2}{N - Tr(\mathbf{I} - \boldsymbol{\Omega}\boldsymbol{\Sigma}_c)}$$

Update precision vector:
$$\hat{\tau}_i = \frac{1 - \hat{\tau}_i \Omega_{ii}}{(\hat{\mathbf{c}}\hat{\mathbf{c}}^H)_{ii}} \rightarrow \boldsymbol{\Sigma}_c = diag(\hat{\boldsymbol{\tau}})$$

Disadvantages in using SBL are well known and they include its performance. As an example, SBL requires an inversion step in the $\Omega$ update and this inversion often leads to numerical problems when $\hat{\sigma}_n^2$ tends towards small values. When this occurs, the low rank **A**$^H$**A** term dominates the expression which results in a rank deficiency problem for the matrix inverse. Secondly, the MxM matrix to be inverted can be very large and this results in computation efficiency being correspondingly low.

Certain aspects of the present disclosure may be used to mitigate such disadvantages of SBL, and one, as mentioned above, is the pruning action carried out in connection with each iteration to rule out supports that are of insignificant amplitude. This may be based on one or more previous estimations of the spectrum amplitudes. The effect is a result which decreases the size of the problem monotonically with each new iteration. In turn, this reduces the computation burden and also well reduces the sensitivity to the rank deficiency problem.

Further, in a typical implementation according to the present disclosure, there is no matrix inversion step as such. Rather, instead of a matrix inversion step as above, Cholesky decomposition is used to take advantage of the structure of the underlying matrix to be inverted such that the speed increases and the computation is more robust against numerical issues. The enhanced solution is described in the below equations where $\hat{\mathbf{c}}_p$ is the amplitude after the pruning and **A**$_p$ is the corresponding steering vector matrix of the pruned support. Matrix **U** is the upper triangular matrix based on the Cholesky decomposition.

Cholesky decompose objective matrix:
$$\mathbf{U} = Cholesky\{\frac{1}{\hat{\sigma}_n^2} \mathbf{A}_p^H \mathbf{A}_p + \boldsymbol{\Sigma}_c\}$$

Update covariance of **c** given **y**:
$$\boldsymbol{\Omega}_p = \mathbf{U}^{-1}(\mathbf{U}^H)^{-1}$$

Update mean of **c** given **y** (output spectrum):
$$\hat{\mathbf{c}}_p = \frac{1}{\hat{\sigma}_n^2} \boldsymbol{\Omega}_p \mathbf{A}_p^H \mathbf{x}$$

Update noise variance:
$$\hat{\sigma}_n^2 = \frac{\|\mathbf{x} - \mathbf{A}_p\hat{\mathbf{c}}_p\|_2^2}{N - Tr(\mathbf{I} - \boldsymbol{\Omega}_p\boldsymbol{\Sigma}_c)}$$

Update precision vector:
$$\hat{\tau}_{p,i} = \frac{1 - \hat{\tau}_i \Omega_{p,ii}}{(\hat{\mathbf{c}}_p\hat{\mathbf{c}}_p^H)_{ii}} \rightarrow \boldsymbol{\Sigma}_c = diag(\hat{\boldsymbol{\tau}}_p)$$

As an illustration in accordance with yet a specific example, one approach consistent with these above equations and the present disclosure permits for related operations to be implemented by logic circuitry such as in the AoA-related module shown at the lower right of FIG. 1A and/or FIG. 1B, assuming the circuits being used align these illustrated examples. In other examples according to the present disclosure, such aspects may be implemented in different manners such as in circuits external to the radar front end circuitry and/or in a manner integrated with such above-described and other aspects and actions.

For purposes of understanding some of the terminology, the flow in this approach may pertain to the above type of steering vector matrix $\mathbf{A_p}$ of full supports. In practice, the entire matrix need not to be precomputed and stored and can be generated on the fly and/or on demand. More specifically, this flow may begin with initialization or resetting (e.g., to zero)of a count variable "p" for tracking the iterations or times involved with the flow until a report or output is generated from the iterative refinement. The initialization may involve updating certain vector-related parameters which, in this example, are: the noise variance parameter, the precision vector, and the output support amplitude vector $\hat{\mathbf{c}}_p$ (to be the amplitude after the pruning) which is initialized to $\mathbf{A}_p^H \mathbf{x}$ . As should be apparent, these vector-related parameters to be updated refer to the variables, terms and mathematical relationships as discussed above in connection with the related aspects of the present disclosure.

Next several actions are performed in this example before the generation of an output or report of a determination of the AoA and each is as reflected in connection with the above equations. In the first of these actions, vector supports may be pruned as indicated above. The objective matrix may be simplified via a Cholesky decomposition, as shown in connection with the above equations. Next the logic circuitry may update the covariance of the output support amplitude vector as indicated above. The logic circuitry may then update the support amplitude vector $\hat{\mathbf{c}}_p$ as indicated and illustrated, and then compute the normalized residual $r_p$ based on an absolute value associated with the above updates and processing (corresponding to the expression in the numerator on the right side of the above noise variance equation). At this juncture, with the residual vector $r_p$ reflecting measurement error taken from a Gaussian distribution, $r_p$ may be stored for a comparison step in connection with the determination associated with deciding whether the residual vector has been sufficiently reduced relative to a specified criteria such as below a minimum residual threshold $r_{TH}$ or whether a maximum iteration count threshold for the above-noted count "p" has been incremented so as to be equal to $p_{max}$. This decision is processed to assess whether a stop criteria is realized (in this example, the thresholds $p_{max}$ and $r_{TH}$). If either of these conditions is met, the logic or computer circuitry effects a report as noted above; otherwise, the noise variance parameter is updated as indicated in the above noise variance equation. Finally, before incrementing the count p and returning or reverting back to the beginning pruning action for the next iteration, the precision vector, as yet another parameter, is updated as indicated in the last of the above equations.

In example experimental and/or simulation-based implementations, consistent with the above aspects of the present disclosure, AoA estimation results have been obtained for two type of virtual (e.g., MIMO) arrays: a 16-element {4,5} co-prime sparse array and a 16-element uniform linear array (ULA). The results show that the targets may be resolved using either array configuration. When the sparse array is used, better resolution performance is shown to be usually achieved. When ULA is used, the performance loss is observed however it is not lost entirely like greedy algorithm methods. This demonstrates that such aspects of the present disclosure result in superior sparse spectral signal reconstruction. From these implementations, such results also show that the spectral peaks are generally wider than other greedy algorithms and, depending on the greedy algorithm, this may be due to its probabilistic modelling of the spectrum amplitudes.

Using this above-type pruning approach in a simulated example in which 6 targets are present and with the number of supports being pruned for the case of pruning-type sparse learning, the outcome shows a monotonic reduction from 256 to 26. This means that the matrix is to be inverted (for the case of the SBL approach) or Cholesky decomposed (for the case of pruning-type sparse learning) can differ by as much as 10 times, resulting in difference in computation as much as 1000 times (based on $O\{n^3\}$) in the final iterations. The use of Cholesky decomposition (sometimes QR decomposition) can be more efficient (depending on the implementation) and it also reduces the sensitivity to rank deficiency so in general the robustness of the present disclosure is improved.

Accordingly, such a pruning aspect of the present disclosure may be beneficial as pruning-type sparse learning method applicable for processing output data, indicative of reflection signals, passed from a sparse array. It is appreciated that such an array may be in any of a variety of different forms such as those disclosed as above. In each instance, the logic (or processing) circuitry receives the output data as being indicative of signal magnitude (e.g., in a spectrum support vector) of the reflection signals via the sparse array, and then discerns angle-of-arrival information for the output data by performing certain steps in an iterative manner for implementation of a sparse learning method which includes pruning, for each iterative update, certain of the plurality of spectrum-related support vectors having respective amplitudes which are insignificant relative to the statistical expectation of the support vector in a preceding iteration.

In certain more-specific examples according to the present disclosure, these steps include updating of a set of support-vector parameters including a covariance estimate of the support vector, and a statistical expectation of the support vector over a plurality of spectrum-related support vectors (e.g., mean) and, in certain more specific aspects, the above-noted set of parameters to be updated with each iteration (e.g., associated with previous values of the support vector) to also include a noise variance associated with the most recent refinement of the support vector, and a scaling parameter such as $\tau$ in the form of a precision vector as exemplified above. Further and as applicable to each such example, to reduce further computational burdens which may be significant for many computer-circuit architectures, certain of the possible support vectors may be pruned relative to the statistical expectation and the matrix-based model may also be processed by Cholesky decomposition with each iterative update.

As a variation from the above specific approach, the present disclosure provides an alternative circuit-based method that may also apply a Cholesky decomposition. In this alternative method, however, a convergence of certain of the updated parameters, including a scaling parameter, may be used to provide further advantages. Such advantages include, as examples, reductions in the space required for updating the above-noted parameters and increased processing speeds for the computations. In this alternative method, the one or more most probable spectrum support vectors (from among a plurality of most probable spectrum support vectors) are modeled as random values in a matrix drawn from a long-tail distribution (e.g., Cauchy or other extended tail distribution), and the distribution is controlled as a function of the scaling parameter.

Such sparse learning algorithms have a large number of intrinsic parameters to be handled by the algorithms. This means that for a problem size of s supports, there exists s number of $\tau$ (known as the precision) parameters and a $\sigma_n^2$ (known as the noise variance) parameter that are to be computed and updated in each iteration. The optimization automatically adapts and finds the best values of these s + 1 internal parameters and so the tuning of these parameters is not done manually, which is a significant advantage of SBL and pSBL algorithms. The convergence of these parameters, however, may be slow because of the sheer large dimension of optimization problem. The problem is somewhat mitigated by the support pruning implemented in pSBL, which reduces the number of supports from M to s so the dimension of the problem is already reduced. Given limited number of measurements, intuitively, the fewer number of parameters required to be estimated the more robust the algorithm can be. So, by further reducing the dimension of the parameter space, more robust performance can be achieved.

Further reduction of the internal parameter dimension can be achieved by replacing the a priori probability distribution, p(c), employed in the BLR model, with a different distribution. In this new class of algorithm, the prior distribution is modelled as a Cauchy distribution (instead of Student's t with $\{\alpha, \beta\} \rightarrow \{0,0\}$). Further, the entire population of support amplitudes are modelled as random values drawn from a single Cauchy distribution (versus in pSBL, each support amplitude is drawn from a distinct distribution), such that the distribution is controlled by only one internal "scaling" parameter, $\tau$. Given that Cauchy is also a long-tail distribution, it can be used to reliably model sparse spectral signals.

Such Cauchy prior strategy has employed in one prior-art algorithm. The prior-art algorithm is, however, not complete because it fails to achieve automatic tuning of the internal parameters $\tau$ and $\sigma_n^2$. The measurement error is modeled as Gaussian (influenced by parameter $\sigma_n^2$) as follows

$$p(\mathbf{x}|\mathbf{c}) = \left(\frac{1}{2\pi\sigma_n^2}\right)^{\frac{N}{2}} e^{-\frac{\|\mathbf{x}-\mathbf{Ac}\|_2^2}{2\sigma_n^2}},$$

and
the a priori distribution is modeled as a Cauchy distribution (also influenced by parameter $\tau$) as follows

$$p(c_i) = \frac{1}{\frac{\pi}{\sqrt{\tau}}(1+\tau|c_i|^2)}.$$

The solution of c is found via MAP by maximizing the posterior probability, p(c|x), transformed by Bayesian theorem, into the following, more tractable, form.

$$\hat{\mathbf{c}} = \arg max_{\mathbf{c}}\, p(\mathbf{c}|\mathbf{x}) = \arg max_{\mathbf{c}}\, \frac{p(\mathbf{x}|\mathbf{c})p(\mathbf{c})}{p(\mathbf{x})} = \arg max_{\mathbf{c}}\, \ln p(\mathbf{x}|\mathbf{c}) + \ln p(\mathbf{c})$$

The solution to the above problem may be derived in a straightforward fashion and may be known. Aspects of the above problem, as applied in the above-characterized radar context of the present disclosure, may be expressed in summary form via the following few equations.

Compute diagonal loading matrix:

$$\mathbf{Q} = diag\{[1 + \tau|c_1|^2, 1 + \tau|c_2|^2, ...,1 + \tau|c_M|^2]\}$$

Update covariance of **c** given **y**:

$$\mathbf{\Omega} = \left(\frac{1}{\sigma_n^2}\mathbf{A}^H\mathbf{A} + 2\tau\mathbf{Q}^{-1}\right)^{-1}$$

Update output spectrum amplitude vector:

$$\hat{\mathbf{c}} = \frac{1}{\sigma_n^2}\mathbf{\Omega}\mathbf{A}^H\mathbf{x}$$

The solution of $\hat{c}$ is a function of itself so it can be iteratively solved. Note that the parameters $\tau$ and $\sigma_n^2$ are manually defined as constants and, consequently, the performance is sensitive to their selected values of these constants. Proper selection is required to ensure convergence to a reasonable solution. In general, the value of $\tau$ usually may be selected such that it is greater than one over the target's spectral amplitude and $\sigma_n^2$ should be selected close to the noise variance.

The manual selection of parameters $\{\tau, \sigma_n^2\}$ is due to the lack of analytical or closed-form solutions. Usually in BLR problems, the selection of the prior distribution follows the conjugate-prior distributions such that analytical solution can be found more easily. The Cauchy-Gaussian pair as used in this approach, however, does not constitutes a conjugate-prior distribution pair and no known analytical solution to $\tau$ and $\sigma_n^2$ exist to our best knowledge. To achieve optimal solution more reliably, an efficient update strategy of the parameters is warranted.

In accordance with this approach, this and aspect of the present disclosure is directed to a closed-form analytical solution to the intrinsic parameter $\{\tau, \sigma_n^2\}$, which solution may involve the following processing actions according to an example solution of the present disclosure. First by employing Laplace approximation the intractable Cauchy-type prior model is converted to a tractable Gaussian-type model. Next, by applying Expectation Maximization (EM) method, an intractable optimization problem is converted into one that iteratively optimizes (increases) its lower bound and such that as a result, an analytical solution to $\{\tau, \sigma_n^2\}$ may be readily found.

According to a more specific example of the present disclosure, the logic circuitry may receive the amplitude-related output data for AoA processing via such an analytical solution (e.g., via Cauchy or long-tail Bayesian linear regression) with automatically tuned parameters by using the following equations and (iteratively updating) set of parameters:

Compute diagonal loading matrix:

$$\mathbf{Q} = diag\{[1 + \tau|c_1|^2, 1 + \tau|c_2|^2, ...,1 + \tau|c_M|^2]\}$$

Update covariance of c given y:

$$\mathbf{\Omega} = \left(\frac{1}{\sigma_n^2}\mathbf{A}^H\mathbf{A} + 2\tau\mathbf{Q}^{-1}\right)^{-1}$$

Update output spectrum amplitude vector:

r: $\qquad \hat{\mathbf{c}} = \frac{1}{\sigma_n^2}\mathbf{\Omega}\mathbf{A}^H\mathbf{x}$

Update noise variance parameter:

$$\hat{\sigma}_n^2 = \frac{\|\mathbf{x} - \mathbf{A}\,\hat{c}\|_2^2}{N - Tr(\mathbf{I} - 2\tau \mathbf{Q}^{-1}\hat{\Omega})}$$

Update scaling parameter:

$$\hat{\tau} = \frac{M/2}{\sum_{i=1}^{M} \frac{\hat{\tau}^2 \left[\Omega_{ii} + (\hat{c}\,\hat{c}^H)_{ii}\right]^3 + 2\hat{\tau}\,(\hat{c}\,\hat{c}^H)_{ii}^2 + \Omega_{ii} + (\hat{c}\,\hat{c}^H)_{ii}}{\left\{1 + \hat{\tau}\left[\Omega_{ii} + (\hat{c}\,\hat{c}^H)_{ii}\right]\right\}^3}}.$$

.

As discussed above, in a more specific example embodiment support pruning may be added and/or Cholesky decomposition may be used to reduce the computation burden and increase the robustness of the solution. With both of these aspects, support pruning and Cholesky decomposition, the above equations and the updating set of the parameters may be as below:

Compute diagonal loading matrix:

$$\mathbf{Q}_p = diag\left\{\left[1 + \hat{\tau}\left|\hat{c}_{p_1}\right|^2, 1 + \hat{\tau}\left|\hat{c}_{p_2}\right|^2, \ldots, 1 + \hat{\tau}\left|\hat{c}_{p_S}\right|^2\right]\right\}$$

Cholesky decompose objective matrix:

$$\mathbf{U} = Cholesky\left\{\frac{1}{\hat{\sigma}_n^2}\mathbf{A}_p^H \mathbf{A}_p + 2\hat{\tau}\mathbf{Q}_p^{-1}\right\}$$

Update covariance of **c** given **y**:

$$\Omega_p = \mathbf{U}^{-1}(\mathbf{U}^H)^{-1}$$

Update output spectrum amplitude vector:

$$\hat{c}_p = \frac{1}{\hat{\sigma}_n^2}\Omega_p \mathbf{A}_p^H \mathbf{x}$$

Update noise variance parameter:

$$\hat{\sigma}_n^2 = \frac{\|\mathbf{x} - \mathbf{A}_p\,\hat{c}_p\|_2^2}{N - Tr(\mathbf{I} - 2\tau \mathbf{Q}_p^{-1}\Omega_p)}$$

Update scaling parameter:

$$\hat{\tau} = \frac{M/2}{\sum_{i=1}^{S} \frac{\hat{\tau}^2\left[\Omega_{ii} + (\hat{c}_p\hat{c}_p^H)_{ii}\right]^3 + 2\hat{\tau}\,(\hat{c}_p\hat{c}_p^H)_{ii}^2 + \Omega_{ii} + (\hat{c}_p\hat{c}_p^H)_{ii}}{\left\{1 + \hat{\tau}\left[\Omega_{ii} + (\hat{c}_p\hat{c}_p^H)_{ii}\right]\right\}^3}}.$$

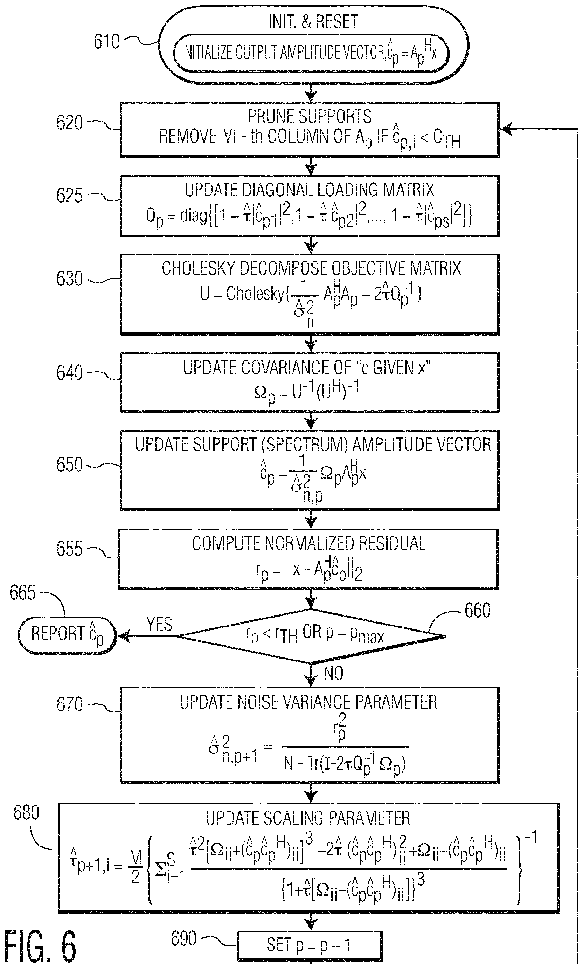

FIG. 6 illustrates one example iterative manner, also according to the present disclosure, for the logic circuitry to carry out the above processing in greater detail. This illustration in the form of a flow chart, includes some of the above-discussed enhancements such as the automatic parameter tuning, support pruning, and replacing the matrix inversion with Cholesky decomposition, although in other examples, fewer than all of these enhancements may be employed.

Again, these operations may be implemented by logic circuitry such as in the AoA-related module shown at the lower right of FIG. 1A and/or FIG. 1B, assuming the circuits being used align these illustrated examples. In other examples according to the present disclosure, such aspects may be implemented in different manners such as in circuits external to the radar front end circuitry and/or in a manner integrated with such above-described and other aspects and actions. It may also be appreciated that in other specific examples of the present disclosure, this exemplary flow may accommodate various modifications. As one of many non-limiting examples, such modifications may include the manner in which the supports are pruned such as by pruning relative to possible supports that are not entirely spectrum symmetric about a middle point in the expectation (e.g., the mean or average) and/or by adjusting or setting the pruning threshold very high, so that the amount of pruning can be decreased or minimized and, in some instances, effectively turned off. Also, for purposes of understanding some of the terminology, the flow in FIG. 6 pertains to the above type of steering vector matrix $\mathbf{A}_p$ of full supports and in practice depending on the application, the entire matrix need not to be precomputed and stored and can be generated on the fly and/or on demand.

In one such specific example, such processing may be carried out as follows, starting with block 610 of FIG. 6, where the logic circuit initializes and resets various variables and parameters. This includes setting a count variable p (e.g., to 1) which may be used to track the iterations or times through the flow of FIG. 6, and an initialization of certain vector-related parameters to be updated which, in this example, are: the noise variance parameter $\hat{\sigma}_n^2$, the scaling

vector $\hat{\tau}$, and the output support or amplitude vector $\hat{\mathbf{c}}_p$ (to be the amplitude after the pruning) which is initialized to $\mathbf{A}_p^H\mathbf{x}$. As should be apparent, these vector-related parameters to be updated refer to the variables, terms and mathematical relationships as discussed above in connection with the related aspects of the present disclosure.

The next several blocks of FIG. 6 are performed, in this example, before the logic circuitry would generate an output or report of a determination of the AoA. Accordingly, from block 610, flow proceeds to block 620 where vector supports are pruned as indicated above and in the illustrated block 620. From block 620, flow proceeds to block 625 where the diagonal loading matrix is updated, and then to block 630 where the objective matrix is simplified via a Cholesky decomposition, as in above equations and illustrated in FIG. 6. From block 630, flow proceeds to block 640 where the logic circuitry updates the covariance of the output support amplitude vector as indicated and illustrated. From block 640, flow proceeds to block 650 where the logic circuitry updates the support amplitude vector $\hat{\mathbf{c}}_p$ as indicated and illustrated. From block 650, flow proceeds to block 655 where the logic circuit computes the normalized residual $r_p$ based on an absolute value associated with the above updates and processing, and this is where a residual vector may be stored for a comparison step in connection with the determination associated with the next block 660. This residual vector may be used to reflect measurement error taken from a Gaussian distribution which, as discussed above, may be obtained by conversion from an intractable Cauchy-type prior model .

In block 660, a decision is made based on whether the residual vector has been reduced below a minimum residual threshold $r_{TH}$ or whether a maximum iteration count threshold for the count p is equal to $p_{max}$. This decision is processed to assess whether a stop criteria is realized (in this example, the thresholds $p_{max}$ and $r_{TH}$). If either of these conditions is met, flow proceeds from block 660 to block 665 where the logic or computer circuitry effects a report as noted above; otherwise, flow proceeds from block 660 to block 670 where the noise variance parameter is updated as indicated above and illustrated herein.

From block 670, flow proceeds to block 680 where another parameter, the precision vector, is updated as indicated above and illustrated herein via block 680. Next, at block 690, the count p is incremented and flow returns to block 620 supports being pruned for the next iteration in the flow shown in this example of FIG. 6.

In example experimental and/or simulation-based implementations, consistent with the above aspects of the present disclosure, AoA estimation results have been obtained for different types of sparse (e.g., MIMO) arrays and while using variations of the methodology disclosed above in connection with FIG. 6 and also with the previously-described pruning-type sparse learning or PSL-type method (which does not involve a Cauchy or long-tail distribution). Such obtain results are associated with experiments that vary the number of elements in a co-prime sparse array and in uniform linear array. The performance of the methodology disclosed above in connection with FIG. 6 surpasses that of the previously-described PSL-type method in terms of resolution and accuracy in both sparse array and linear array cases. The solution using the FIG. 6 type methodology and its above-discussed variations) is sparser than the previously-described PSL-type method as well. In this regard, reference to such FIG. 6 type methodology includes various examples discussed above in connection with FIG. 6 and also previous examples such as those in which the logic circuitry bases its report of the support vector on an assessment of at least one most probable spectrum support vector from among a plurality of most probable spectrum support vectors modeled as random values in a matrix drawn from a long-tail distribution wherein the long-tail distribution is controlled as a function of a scaling parameter, and updating a set of parameters including a covariance estimate, the scaling parameter, and a noise variance parameter. Such reference also includes related methodologies involving steps being carried out by logic circuitry to account for measurement errors and noise by iteratively updating measurement-error and noise parameters, and with the use of a matrix-based model in which each of the possible spectrum support vectors is drawn from a long-tail distribution.

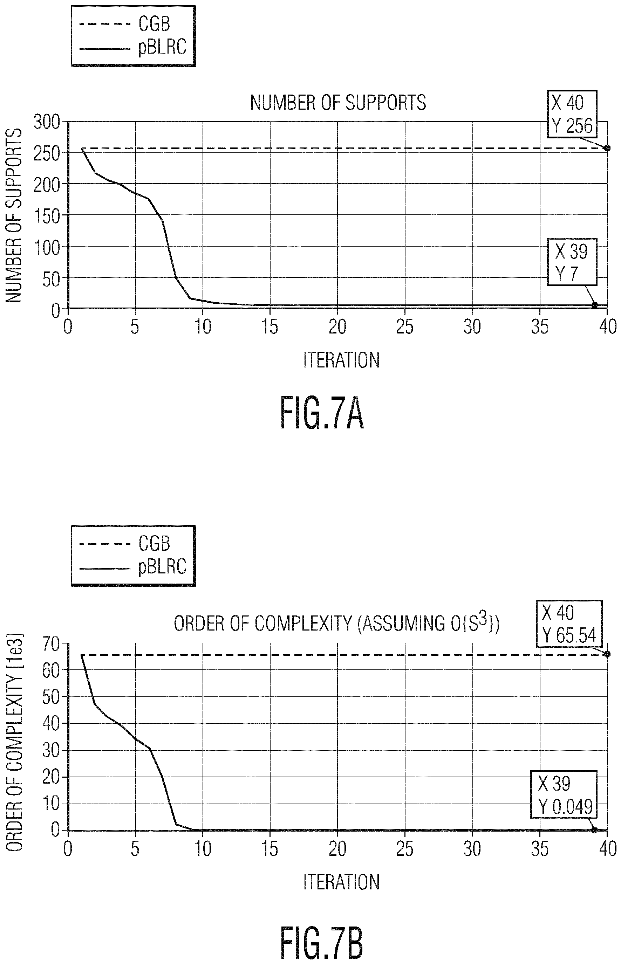

In particular examples disclosed herein by way of FIGs. 7A and 7B, an illustration of the significance of improvements and enhancement is provided using plots of simulated implementations. In these examples, the number of supports solved in each iteration for the FIG. 6 type methodology and the previously-described PSL-type method were obtained for an implementation in which 6 targets are present. In this example implementation, the number of supports is pruned for the case involving the previously-described PSL-type method and the number is monotonically reduced from about 256 to about 7, thereby indicating performance of being about 48k (36^3) times faster in the final iterations than for the FIG. 6 type methodology (based on O{$n^3$}). Because of the sparse solution that the FIG. 6 type methodology produces, more supports are pruned than that of the previously-described PSL-type method so the FIG. 6 type methodology is more efficient when it comes to computing the diagonal loading matrix, which tends to be the most expensive (e.g., time-consuming) step in the process.

Accordingly, while the previously-described PSL-type method has been shown to provide significant improvements over prior sparse Bayesian learning algorithms, the FIG. 6 type methodology has been shown to provide even further significant improvements.

In yet other examples involving a realistic target scene, simulations have been conducted for testing different ones of the high-resolution AoA estimation algorithms as discussed and disclosed herein. In one such scenario, 5 sedan automobile targets are placed between 70m and 90m from the radar under test for testing targets of realistic physical structure. Three 3 arcs of reference corner reflectors are placed at 65m, 95m, and 105m radii for testing point-target scenario with uniform angle spacing. The radar under test consists of a 16-element linear array (in the azimuthal direction) which are arranged in a uniform linear array as well as a {4,5} coprime array. Distinctive image feature can be observed between the different algorithms. Highest resolution imaging performance can be achieved by the above pruning types of methodology (e.g., previously-described PSL-type and FIG. 6 type methodologies), among which the FIG. 6 type methodology delivers the least spurious solution and therefore, it is the highest performing solution in such contexts.

Based on the above discussion, yet further exemplary variations (among a variety of others) in accordance with the present disclosure are noteworthy. For instance, FIG. 6 type methodologies may be applicable any sparse array design and uniform linear array design and is not limited to the extendable MIMO co-prime array. Also, these FIG. 6 type methodologies may be used for solving a more generic linear regression problem of solving c given $y = Ac$ with A being an arbitrary matrix not limited to the form of this disclosure. Further, the various examples and/or aspects of the methods disclosed herein (e.g., previously-described PSL-type and FIG. 6 type methodologies) can be readily extended to two-dimensional AoA (i.e., azimuth and elevation) estimation by employing a two-dimensional sparse antenna array and defining the matrix A and c accordingly (e.g., each column of A maps to an azimuth-elevation steering angle upon which it amplitude, which is the corresponding element of c, is estimated, where the c vector is sparse).

Related examples and aspects are disclosed in concurrently-filed U.S. Patent Applications: Serial No. 17/185,084 (Dkt. No. 82284414US01_NXPS.1551PA) concerning the previously-described PSL-type methods; Serial No. 17/185,040, publication number 2022/0268884 (Dkt. No. 82284396US01 _NXPS.1550PA) concerning the sparse array and coprime element spacings; and Serial No. 17/185,115, publication number 2022/0268911 (Dkt. No. 82284405US01_NXPS.1553PA) concerning updating/refining a correlation of processing relative to upper-side and lower-side spectrum support vectors relative to a spatial frequency support vector.

Terms to exemplify orientation, such as upper/lower, left/right, top/bottom and above/below, may be used herein to refer to relative positions of elements as shown in the figures. It should be understood that the terminology is used for notational convenience only and that in actual use the disclosed structures may be oriented different from the orientation shown in the figures. Thus, the terms should not be construed in a limiting manner.

As examples, the Specification describes and/or illustrates aspects useful for implementing the claimed disclosure by way of various circuits or circuitry which may be illustrated as or using terms such as blocks, modules, device, system, unit, controller, etc. and/or other circuit-type depictions. Such circuits or circuitry are used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU), in one example the logic circuitry may carry out a process or method (sometimes "algorithm") by performing such activities and/or steps associated with the above-discussed functionalities. In other examples, the logic circuitry may carry out a process or method by performing these same activities/operations and in addition.

For example, in certain of the above-discussed embodiments, one or more modules are discrete logic circuits or programmable logic circuits configured and arranged for implementing these operations/activities, as may be carried out in the approaches shown in the signal/data flow of FIGs. 1A, 1B and 2. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described above is used by the programmable circuit to perform the related steps, functions, operations, activities, *etc.* Depending on the application, the instructions (and/or configuration data) can be configured for implementation in logic circuitry, with the instructions (whether characterized in the form of object code, firmware or software) stored in and accessible from a memory (circuit). As another example, where the Specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

**Claims**

1.   An apparatus comprising:

a radar circuit (150, 160) configured to receive reflection signals, in response to transmitted radar signals, as reflections from objects; and
computer processing circuitry configured to

process data corresponding to the reflection signals via an array,
generate output data indicative of signal magnitude associated with the reflection signals, and based on the generated output data,
iteratively

identify at least one most probable spectrum support vector from among a plurality of spectrum support vectors modelled as random values in a matrix drawn from a long-tail distribution that is a function of a scaling parameter;
update (670, 680) a set of parameters including the scaling parameter and a noise variance parameter, the noise variance parameter being associated with a measurement error for said at least one most probable spectrum support vector from a previous iteration; and

report (665), in response to an acceptable degree of convergence of said at least one most probable spectrum support vector, angle-of-arrival information for the output data;
**characterized in that**
the computer processing circuitry is further configured to prune (620), for each iterative update, certain of said at least one most probable spectrum support vector having respective amplitudes which are insignificant relative to a statistical expectation of the at least one most probable spectrum support vector associated with a preceding iteration.

2. The apparatus of claim 1, wherein the long-tail distribution is a Cauchy distribution.

3. The apparatus of any of the preceding claims, wherein the scaling parameter is initialized to a value that is greater than one over a spectral amplitude corresponding to the generated output data, and the noise variance parameter is initialized to be close to a measured noise variance.

4. The apparatus of any of the preceding claims, wherein the set of parameters further includes a covariance estimate.

5. The apparatus of any of the preceding claims, wherein with each iteration the computer processing circuitry is further configured to process the matrix via Cholesky decomposition.

6. The apparatus of any of the preceding claims, wherein the computer processing circuitry is further configured to convert a modeled set of said at least one most probable spectrum support vector to a tractable Gaussian model of said at least one most probable spectrum support vector.

7. The apparatus of claim 6, wherein the computer processing circuitry is further configured to apply a Laplace approximation for providing said tractable Gaussian model of said at least one most probable spectrum support vector.

8. The apparatus of any of the preceding claims, wherein the computer processing circuitry is configured to iteratively updated the set of parameters over an increasing iteration count which stops as a function of the parameters becoming optimized.

9. The apparatus of any of the preceding claims, further including: sets of antennas for radar signal transmission and reception; front-end analog circuitry for radar signal transmissions and in response, reception of reflections from the radar signal transmissions; and conversion circuitry configured to communicatively couple the front-end analog circuitry with the computer processing circuitry.

10. The apparatus of claim 1, wherein: the apparatus comprises a radar system;

the array has at least one embedded sparse array;
the long-tail distribution is a long-tail Cauchy distribution; and
the set of parameters includes a covariance estimate.

11. The apparatus of claim 10, further including: sets of antennas for radar signal transmission and reception; front-end analog circuitry for radar signal transmissions and in response, reception of reflections from the radar signal transmissions; and conversion circuitry to communicatively couple the front-end analog circuitry with the computer processing circuitry.

12. The apparatus of claim 10 or 11, wherein said at least one most probable spectrum support vector is estimated by finding, using the matrix, possible values for said at least one most probable spectrum support vector that maximize a posterior probability while minimizing a residual error associated with previously assessed ones of the possible values.

13. A method for use in radar circuit which receives reflection signals, in response to transmitted radar signals, as reflections from objects, the method performed by computer processing circuitry and comprising:

processing data corresponding to the reflection signals via an array,
generating output data indicative of signal magnitude associated with the reflection signals, and based on the generated output data,
iteratively
identifying at least one most probable spectrum support vector from among a plurality of spectrum support vectors modelled as random values in a matrix drawn from a long-tail distribution that is a function of a scaling parameter;
updating a set of parameters including the scaling parameter and a noise variance parameter, the noise variance parameter being associated with a measurement error for said at least one most probable spectrum support vector from a previous iteration; and
reporting, in response to an acceptable degree of convergence of said at least one most probable spectrum support vector, angle-of-arrival information for the output data;
wherein the method is **characterized by** pruning, for each iterative update, certain of said at least one most probable spectrum support vector having respective amplitudes which are insignificant relative to a statistical expectation of the at least one most probable spectrum support vector associated with a preceding iteration.

14. The method of claim 13, wherein the scaling parameter is initialized to a value that is greater than one over a spectral amplitude corresponding to the generated output data, and the noise variance parameter is initialized to be close to a measured noise variance.


**Patentansprüche**

1. Vorrichtung, die Folgendes umfasst:

eine Radarschaltung (150, 160), die konfiguriert ist, Reflexionssignale als Antwort auf gesendete Radarsignale als Reflexionen von Gegenständen zu empfangen; und
eine Computerverarbeitungs-Schaltungsanordnung, die konfiguriert ist zum
Verarbeiten von Daten, die den Reflexionssignalen entsprechen, über ein Feld,
Erzeugen von Ausgangsdaten, die eine Signalgröße angeben, die den Reflexionssignalen zugeordnet sind, und auf der Grundlage der erzeugten Ausgangsdaten iterativ
Identifizieren mindestens eines wahrscheinlichsten Spektrum-Hilfsvektors von mehreren Spektrum-Hilfsvektoren, die als Zufallswerte in einer Matrix modelliert sind, die aus einer Verteilung mit langem Ende gezogen werden, die eine Funktion eines Skalierungsparameters ist;
Aktualisieren (670, 680) einer Gruppe von Parametern, die den Skalierungsparameter und einen Rauschvarianzparameter enthält, wobei der Rauschvarianzparameter einem Messfehler für den mindestens einen wahrscheinlichsten Spektrum-Hilfsvektor aus einer vorhergehenden Iteration zugeordnet ist; und
Berichten (665) als Antwort auf einen annehmbaren Konvergenzgrad des mindestens einen wahrscheinlichsten Spektrum-Hilfsvektors von Einstrahlwinkelinformationen für die Ausgangsdaten;
**dadurch gekennzeichnet, dass** die Computerverarbeitungs-Schaltungsanordnung ferner konfiguriert ist, für jede iterative Aktualisierung bestimmte des mindestens einen wahrscheinlichsten Spektrum-Hilfsvektors, die jeweilige Amplituden aufweisen, die relativ zu einem statistischen Erwartungswert für den mindestens einen wahrscheinlichsten Spektrum-Hilfsvektor, der einer vorhergehenden Iteration zugeordnet ist, unerheblich sind, zu bereinigen (620) .

2. Vorrichtung nach Anspruch 1, wobei die Verteilung mit langem Ende eine Cauchy-Verteilung ist.

3. Vorrichtung nach einem der vorhergehenden Ansprüche, wobei der Skalierungsparameter auf einen Wert initialisiert wird, der größer ist als einer über einer Spektralamplitude, die den erzeugten Ausgangsdaten entspricht, und der Rauschvarianzparameter derart initialisiert wird, dass er sich nahe an einer gemessenen Rauschvarianz befindet.

**4.** Vorrichtung nach einem der vorhergehenden Ansprüche, wobei die Gruppe von Parametern ferner einen Kovarianz-Schätzwert enthält.

**5.** Vorrichtung nach einem der vorhergehenden Ansprüche, wobei die Computerverarbeitungs-Schaltungsanordnung mit jeder Iteration ferner konfiguriert ist, die Matrix über eine Cholesky-Zerlegung zu verarbeiten.

**6.** Vorrichtung nach einem der vorhergehenden Ansprüche, wobei die Computerverarbeitungs-Schaltungsanordnung ferner konfiguriert ist, eine modellierte Gruppe des mindestens einen wahrscheinlichsten Spektrum-Hilfsvektors in ein handhabbares Gauß-Modell des mindestens einen wahrscheinlichsten Spektrum-Hilfsvektors umzusetzen.

**7.** Vorrichtung nach Anspruch 6, wobei die Computerverarbeitungs-Schaltungsanordnung ferner konfiguriert ist, eine Laplace-Näherung zum Bereitstellen des handhabbaren Gauß-Modells des mindestens einen wahrscheinlichsten Spektrum-Hilfsvektors anzuwenden.

**8.** Vorrichtung nach einem der vorhergehenden Ansprüche, wobei die Computerverarbeitungs-Schaltungsanordnung konfiguriert ist, die Gruppe von Parametern über eine zunehmende Iterationszählung, die als eine Funktion davon, dass die Parameter optimiert werden, stoppt, iterativ zu aktualisieren.

**9.** Vorrichtung nach einem der vorhergehenden Ansprüche, die ferner Folgendes enthält: Antennengruppen zum Aussenden und Empfangen von Radarsignalen; eine analoge Frontend-Schaltungsanordnung für Radarsignal-Aussendungen und als Antwort darauf den Empfang von Reflexionen von den Radarsignal-Aussendungen; und eine Umsetzungs-Schaltungsanordnung, die konfiguriert ist, die analoge Frontend-Schaltungsanordnung mit der Computerverarbeitungs-Schaltungsanordnung kommunikationstechnisch zu koppeln.

**10.** Vorrichtung nach Anspruch 1, wobei:

die Vorrichtung ein Radarsystem umfasst;
das Feld mindestens ein eingebettetes, dünn besetztes Feld aufweist;
die Verteilung mit langem Ende eine Cauchy-Verteilung mit langen Ende ist; und
die Gruppe von Parametern einen Kovarianz-Schätzwert enthält.

**11.** Vorrichtung nach Anspruch 10, die ferner Folgendes enthält: Antennengruppen zum Aussenden und Empfangen von Radarsignalen; eine analoge Frontend-Schaltungsanordnung zum Aussenden von Radarsignalen und als Antwort zum Empfangen von Reflexionen von den Radarsignal-Aussendungen; und eine Umsetzungs-Schaltungsanordnung, um die analoge Frontend-Schaltungsanordnung mit der Computerverarbeitungs-Schaltungsanordnung kommunikationstechnisch zu koppeln.

**12.** Vorrichtung nach Anspruch 10 oder 11, wobei der mindestens eine wahrscheinlichste Spektrum-Hilfsvektor geschätzt wird, indem unter Verwendung der Matrix mögliche Werte für den mindestens einen wahrscheinlichsten Spektrum-Hilfsvektor ermittelt werden, die eine posteriore Wahrscheinlichkeit maximieren, während ein Restfehler, der früher bewerteten der möglichen Werten zugeordnet ist, minimiert wird.

**13.** Verfahren zur Verwendung in einer Radarschaltung, die Reflexionssignale als Antwort auf gesendete Radarsignale als Reflexionen von Gegenständen empfängt, wobei das Verfahren durch eine Computerverarbeitungs-Schaltungsanordnung durchgeführt wird und Folgendes umfasst:

Verarbeiten von Daten, die den Reflexionssignalen entsprechen, über ein Feld, Erzeugen von Ausgangsdaten, die eine Signalgröße angeben, die den Reflexionssignalen zugeordnet sind, und auf der Grundlage der erzeugten Ausgangsdaten iterativ Identifizieren mindestens eines wahrscheinlichsten Spektrum-Hilfsvektors von mehreren Spektrum-Hilfsvektoren, die als Zufallswerte in einer Matrix modelliert sind, die aus einer Verteilung mit langem Ende gezogen werden, die eine Funktion eines Skalierungsparameters ist;
Aktualisieren einer Gruppe von Parametern, die den Skalierungsparameter und einen Rauschvarianzparameter enthält, wobei der Rauschvarianzparameter einem Messfehler für den mindestens einen wahrscheinlichsten Spektrum-Hilfsvektor aus einer vorhergehenden Iteration zugeordnet ist; und
Berichten, als Antwort auf einen annehmbaren Konvergenzgrad des mindestens einen wahrscheinlichsten Spektrum-Hilfsvektors, von Einstrahlwinkelinformationen für die Ausgangsdaten;
wobei das Verfahren **gekennzeichnet ist durch** das Bereinigen für jede iterative Aktualisierung von bestimmten des mindestens einen wahrscheinlichsten Spektrum-Hilfsvektors, die jeweilige Amplituden aufweisen, die relativ zu einem statistischen Erwartungswert für den mindestens einen wahrscheinlichsten Spektrum-Hilfsvektor, der einer vorhergehenden Iteration zugeordnet ist, unerheblich sind.

14. Verfahren nach Anspruch 13, wobei der Skalierungsparameter auf einen Wert initialisiert wird, der größer ist als einer über einer Spektralamplitude, die den erzeugten Ausgangsdaten entspricht, und der Rauschvarianzparameter derart initialisiert wird, dass er sich nahe an einer gemessenen Rauschvarianz befindet.

**Revendications**

1. Appareil, comprenant :

   un circuit radar (150, 160) configuré pour recevoir des signaux de réflexion, en réponse à des signaux radar émis, sous forme de réflexions provenant d'objets ; et
   une circuiterie de traitement informatique configurée pour
   traiter des données correspondant aux signaux de réflexion à l'aide d'un réseau,
   générer des données de sortie indiquant des grandeurs de signal associées aux signaux de réflexion et, sur la base des données de sortie générées, itérativement
   identifier au moins un vecteur de support de spectre le plus probable parmi une pluralité de vecteurs de support de spectre modélisés sous forme de valeurs aléatoires dans une matrice tirée d'une distribution à queue longue qui est fonction d'un paramètre d'échelle ;
   mettre à jour (670, 680) un ensemble de paramètres comportant le paramètre d'échelle et un paramètre de variance de bruit, le paramètre de variance de bruit étant associé à une erreur de mesure pour ledit au moins un vecteur de support de spectre le plus probable provenant d'une itération précédente ; et
   notifier (665), en réponse à un degré acceptable de convergence dudit au moins un vecteur de support de spectre le plus probable, des informations d'angle d'arrivée pour les données de sortie ;
   **caractérisé en ce que** la circuiterie de traitement informatique est configurée en outre pour élaguer (620), pour chaque mise à jour itérative, certains dudit au moins un vecteur de support de spectre le plus probable dont les amplitudes respectives sont négligeables par rapport à une espérance statistique de l'au moins un vecteur de support de spectre le plus probable associée à une itération précédente.

2. Appareil selon la revendication 1, la distribution à queue longue étant une distribution de Cauchy.

3. Appareil selon l'une quelconque des revendications précédentes, le paramètre d'échelle étant initialisé à une valeur qui est supérieure à un sur une amplitude spectrale correspondant aux données de sortie générées, et le paramètre de variance de bruit étant initialisé de manière à être proche d'une variance de bruit mesurée.

4. Appareil selon l'une quelconque des revendications précédentes, l'ensemble de paramètres comportant en outre une estimation de covariance.

5. Appareil selon l'une quelconque des revendications précédentes, la circuiterie de traitement informatique étant configurée en outre pour, avec chaque itération, traiter la matrice à l'aide d'une décomposition de Cholesky.

6. Appareil selon l'une quelconque des revendications précédentes, la circuiterie de traitement informatique étant configurée en outre pour convertir un ensemble modélisé dudit au moins un vecteur de support de spectre le plus probable en un modèle gaussien tractable dudit au moins un vecteur de support de spectre le plus probable.

7. Appareil selon la revendication 6, la circuiterie de traitement informatique étant configurée en outre pour appliquer une approximation de Laplace pour fournir ledit modèle gaussien tractable dudit au moins un vecteur de support de spectre le plus probable.

8. Appareil selon l'une quelconque des revendications précédentes, la circuiterie de traitement informatique étant configurée pour mettre à jour itérativement l'ensemble de paramètres sur un compte croissant d'itérations qui s'interrompt lorsque les paramètres sont optimisés.

9. Appareil selon l'une quelconque des revendications précédentes, comportant en outre : des ensembles d'antennes pour l'émission et la réception de signaux radar ; une circuiterie analogique frontale pour réaliser des émissions de signaux radar et, en réponse à celles-ci, recevoir des réflexions des émissions de signaux radar ; et une circuiterie de conversion configurée pour coupler en communication la circuiterie analogique frontale avec la circuiterie de traitement informatique.

10. Appareil selon la revendication 1,

l'appareil comprenant un système radar ;
le réseau ayant au moins un réseau parcimonieux incorporé ;
la distribution à queue longue étant une distribution à queue longue de Cauchy ; et
l'ensemble de paramètres comportant une estimation de covariance.

11. Appareil selon la revendication 10, comportant en outre : des ensembles d'antennes pour l'émission et la réception de signaux radar ; une circuiterie analogique frontale pour réaliser des émissions de signaux radar et, en réponse à celles-ci, recevoir des réflexions des émissions de signaux radar ; et une circuiterie de conversion configurée pour coupler en communication la circuiterie analogique frontale avec la circuiterie de traitement informatique.

12. Appareil selon la revendication 10 ou 11, ledit au moins un vecteur de support de spectre le plus probable étant estimé en trouvant, à l'aide de la matrice, des valeurs possibles pour ledit au moins un vecteur de support le plus probable qui maximisent une probabilité postérieure tout en minimisant une erreur résiduelle associée à des valeurs précédemment évaluées des valeurs possibles.

13. Procédé destiné à être utilisé dans un circuit radar qui reçoit des signaux de réflexion, en réponse à des signaux radar émis, sous forme de réflexions provenant d'objets, le procédé étant réalisé par une circuiterie de traitement informatique et comprenant :

le traitement de données correspondant aux signaux de réflexion à l'aide d'un réseau, la génération de données de sortie indiquant des grandeurs de signal associées aux signaux de réflexion et, sur la base des données de sortie générées, itérativement l'identification d'au moins un vecteur de support de spectre le plus probable parmi une pluralité de vecteurs de support de spectre modélisés sous forme de valeurs aléatoires dans une matrice tirée d'une distribution à queue longue qui est fonction d'un paramètre d'échelle ;
la mise à jour d'un ensemble de paramètres comportant le paramètre d'échelle et un paramètre de variance de bruit, le paramètre de variance de bruit étant associé à une erreur de mesure pour ledit au moins un vecteur de support de spectre le plus probable provenant d'une itération précédente ; et
la notification, en réponse à un degré acceptable de convergence dudit au moins un vecteur de support de spectre le plus probable, d'informations d'angle d'arrivée pour les données de sortie ;
le procédé étant **caractérisé par** l'élagage, pour chaque mise à jour itérative, de certains dudit au moins un vecteur de support de spectre le plus probable dont les amplitudes respectives sont négligeables par rapport à une espérance statistique de l'au moins un vecteur de support de spectre le plus probable associée à une itération précédente.

14. Procédé selon la revendication 13, le paramètre d'échelle étant initialisé à une valeur qui est supérieure à un sur une amplitude spectrale correspondant aux données de sortie générées, et le paramètre de variance de bruit étant initialisé de manière à être proche d'une variance de bruit mesurée.

FIG. 1

EP 4 050 364 B1

FIG. 1B

FIG. 2

RADAR TRANSCEIVER ADC DATA STREAM

SAMPLE # (FAST TIME)

CHIRP # (SLOW TIME)

ADC SAMPLES

ANT # (SPACE)

RANGE

RANGE-DOPPLER

FFT

$(r, r_j)$ cell

NO DETECTION

CFAR DETECTION

DETECTION

MIMO VIRTUAL ARRAY CONSTRUCTION

ARRAY MEASURMENT VECTOR

$x_1[k]$ ANTENNA-1

$x_N[k]$ ANTENNA-N

AoA ESTIMATOR

TARGETS' RANGE, DOPPLER, ANGLE (AZIMUTH/ ELEVATION), RCS, ETC. INFO

PERCEPTION, TRAKING, FUSION, DRIVE CONTROL PROCESSORS

TARGET LIST, MAP POINT CLOUD, OR CUBE

EP 4 050 364 B1

EP 4 050 364 B1

○ COMPOSITE SPA

□ 4-ELE SPACING ULA

◇ 5-ELE SPACING ULA

310

312

314

FIG. 3A

FIG. 3B

EP 4 050 364 B1

EP 4 050 364 B1

COMPOSITE SPA

4-ELE SPACING ULA

5-ELE SPACING ULA

MIMO TX1-RX1~8 ARRAY

MIMO TX2-RX1~8 ARRAY

410

412

414

FIG. 4A

FIG. 4B

FIG. 5A

FIG. 5B

610 — **INIT. & RESET**
INITIALIZE OUTPUT AMPLITUDE VECTOR, $\hat{c}_p = A_p^H x$

620 — **PRUNE SUPPORTS**
REMOVE $\forall i$ - th COLUMN OF $A_p$ IF $\hat{c}_{p,i} < C_{TH}$

625 — **UPDATE DIAGONAL LOADING MATRIX**
$Q_p = \text{diag}\{[1 + \hat{\tau}|\hat{c}_{p1}|^2, 1 + \hat{\tau}|\hat{c}_{p2}|^2, ..., 1 + \hat{\tau}|\hat{c}_{ps}|^2]\}$

630 — **CHOLESKY DECOMPOSE OBJECTIVE MATRIX**
$U = \text{Cholesky}\{\frac{1}{\hat{\sigma}_n^2} A_p^H A_p + 2\hat{\tau} Q_p^{-1}\}$

640 — **UPDATE COVARIANCE OF "c GIVEN x"**
$\Omega_p = U^{-1}(U^H)^{-1}$

650 — **UPDATE SUPPORT (SPECTRUM) AMPLITUDE VECTOR**
$\hat{c}_p = \frac{1}{\hat{\sigma}_{n,p}^2} \Omega_p A_p^H x$

655 — **COMPUTE NORMALIZED RESIDUAL**
$r_p = \|x - A_p^H \hat{c}_p\|_2$

665 — REPORT $\hat{c}_p$ ← YES — $r_p < r_{TH}$ OR $p = p_{max}$ — 660

NO

670 — **UPDATE NOISE VARIANCE PARAMETER**
$\hat{\sigma}_{n,p+1}^2 = \frac{r_p^2}{N - \text{Tr}(I - 2\tau Q_p^{-1}\Omega_p)}$

680 — **UPDATE SCALING PARAMETER**
$\hat{\tau}_{p+1,i} = \frac{M}{2}\left\{\sum_{i=1}^{S} \frac{\hat{\tau}^2[\Omega_{ii} + (\hat{c}_p \hat{c}_p^H)_{ii}]^3 + 2\hat{\tau}(\hat{c}_p \hat{c}_p^H)_{ii}^2 + \Omega_{ii} + (\hat{c}_p \hat{c}_p^H)_{ii}}{\{1 + \hat{\tau}[\Omega_{ii} + (\hat{c}_p \hat{c}_p^H)_{ii}]\}^3}\right\}^{-1}$

690 — SET $p = p + 1$

**FIG. 6**

FIG.7A

FIG.7B

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109061556 A
- US 185084

- US 17185040 B

**Non-patent literature cited in the description**

- A Robust Sparse Bayesian Learning-Based DOA Estimation Method With Phase Calibration. **CHEN ZHIMIN et al.** IEEE ACCESS. IEEE, 31 July 2020, vol. 8, 141511-141522